# EUROPÄISCHE PATENTSCHRIFT

(11) **EP 3 159 662 B1**
(45) Veröffentlichungstag und Bekanntmachung des Hinweises auf die Patenterteilung: **11.09.2019**
(21) Anmeldenummer: 16191918.8
(22) Anmeldetag: 30.09.2016
(51) Int. Cl.: G01F 23/00, G01F 23/284, G01S 13/10, G01S 13/88

(54) **SEILSONDE, FÜLLSTANDMESSGERÄT UND VERFAHREN ZUM HERSTELLEN EINER SEILSONDE**
ROPE PROBE, LEVEL SENSING DEVICE, AND METHOD FOR PRODUCING A ROPE PROBE
SONDE À CORDE, DÉTECTEUR DE NIVEAU ET PROCÉDÉ DE FABRICATION D'UNE SONDE À CORDE

(30) Priorität: 21.10.2015 DE 102015220578
(43) Veröffentlichungstag der Anmeldung: 26.04.2017
(73) Patentinhaber: VEGA Grieshaber KG, 77709 Wolfach (DE)
(72) Erfinder: BENZ, Joachim, 77756 Hausach (DE)
(74) Vertreter: Maiwald Patent- und Rechtsanwaltsgesellschaft mbH

(56) Entgegenhaltungen:
- EP-A1- 0 849 570
- WO-A1-2004/042333
- DE-A1- 2 401 486
- DE-A1- 4 224 635
- DE-A1-102005 015 548
- DE-U1- 9 103 122
- US-A- 3 319 514
- US-A1- 2007 205 907

## Beschreibung

### Technisches Gebiet

Die vorliegende Erfindung betrifft das technische Gebiet der Messtechnik. Insbesondere betrifft die vorliegende Erfindung die Radar-, Laufzeit- oder Reflexionsmesstechnik. So beschreibt die vorliegende Erfindung eine Seilsonde, ausgeführt für ein Füllstandmessgerät, ein Füllstandmessgerät und ein Verfahren zum Herstellen einer Seilsonde.

### Hintergrund der Erfindung

Bei Sensoren, welche nach dem Messprinzip "geführtes Radar" oder "geführte Mikrowelle" arbeiten, werden häufig Messsonden bestehend aus einem Messseil und einem Straffgewicht oder Zentriergewicht eingesetzt. Die Messsonden helfen dabei, Füllstände durch Auswertungen von Reflexionen, Laufzeiten und/oder Echos von geführten Mikrowellen oder geführten Radarwellen zu messen. Für solch eine Messung werden Wellen oder Signale angeregt, welche sich entlang einer Sonde innerhalb eines Behälters ausbreiten, und welche an markanten Stellen in dem Behälter reflektiert werden, wie beispielsweise an Übergängen zwischen unterschiedlichen Materialien. Diese Reflexionen lassen sich als Echos in einem Echodiagramm kenntlich machen. Durch das Vermessen der bei dieser Messung gewonnenen Zeitabstände der Echos kann auf die markanten Stellen, wie den Füllstand, innerhalb des Behälters zurückgeschlossen werden. Insbesondere kann ermittelt werden, ob der Behälter leer ist, d. h. ob er lediglich mit Luft gefüllt ist, oder ob sich ein Füllgut oder Schüttgut in dem Behälter befindet. Meist wird eine Füllstandmessung erst durchgeführt, wenn die Sonde das Füllgut oder Medium berührt oder in das Füllgut oder Medium eingetaucht ist. Solange die Sonde nicht im Kontakt zu dem Medium steht, dessen Füllstand ermittelt werden soll ergibt sich ein Totbereich.

An einem Ende einer Seilsonde ist ein Straffgewicht angebracht. Das Straffgewicht oder Zentriergewicht dient dazu, das Messseil der Messsonde in einer möglichst stabilen Lage innerhalb eines Behälters zu halten, um ein möglichst gleichmäßiges Eintauchen des Endes des Messseils in das Füllgut zu gewährleisten.

Eine Gewichtsvorrichtung für eine Sonde ist beispielsweise der Druckschrift US 2015168203 A1 zu entnehmen.

Die Druckschrift DE 10 2005 015 548 B4 beschreibt eine Vorrichtung zur Bestimmung und/oder Überwachung des Füllstandes eines Mediums, bei der ausgenutzt wird, dass die elektromagnetischen Signale in Kontakt mit einem Medium kommen und somit vom Medium beeinflusst werden, um Aussagen über das Medium erlauben zu können.

Dokument DE 42 24 635 A1 betrifft eine Sonde zur Überwachung eines Mediums. Dabei wird ein Elektrodenseil in einer Seilendkapsel der Sonde scharf nach oben umgebogen, so dass der umgebogene Endabschnitt unmittelbar neben dem ihm vorangehenden Abschnitt des Elektrodenseils verläuft. Eine Hülse umgibt beide Abschnitte radial eng.

Dokument EP 0 849 570 A1 beschreibt eine Endkapsel für eine Seilsonde mit einem Topf, einem Deckel, einem Einsatz, in dem das Seil fixiert ist, einem Dichtelement und einem Stopfen. Das Seil ist dabei durch den Deckel, den Stopfen, und das Dichtelement hindurch und in den Einsatz hinein geführt.

Dokument US 2007/0205907 A1 offenbart eine Schalteranordnung für ein Füllstandmesssystem für einen Behälter mit schwimmendem Deckel. Wird ein hoher Füllstand erreicht, so wird ein in einem Straffgewicht angeordneter Schalter betätigt, um das Erreichen des Füllstandes zu signalisieren.

Dokument G 91 03 122 betrifft eine Füllstandsonde, welche auf dem kapazitiven Messprinzip beruht. Das Sondenseil und die Behälterwand bilden die beiden Platten eines Kondensators, wobei ein Abstand der Platten durch eine sich ausdehnende Membran verkleinert und damit die Kapazität erhöht. Die Kapazität stellt somit ein Maß für den Füllzustand der Membran dar.

Das Dokument WO 2004/042333 A1 beschreibt eine Vorrichtung zum Straffen eines Seils eines Füllstandmessgeräts, wobei an einem in einen Behälter hineinreichenden, freien Endabschnitt des Seils ein Endgewicht mit einer durchgehenden Aussparung angeordnet ist.

### Zusammenfassung der Erfindung

Es mag ein Bedarf bestehen, ein effizientes Messen von Füllständen zu ermöglichen.

Dementsprechend werden eine, Seilsonde ausgeführt für ein Füllstandmessgerät, ein Füllstandmessgerät und ein Verfahren zum Herstellen einer Seilsonde angegeben.

Der Gegenstand der Erfindung ergibt sich aus den Merkmalen der unabhängigen Patentansprüche. Spezifische Ausführungsbeispiele und Weiterbildungen der Erfindung sind in den abhängigen Patentansprüchen angegeben.

Gemäß einem Aspekt der vorliegenden Erfindung wird eine Seilsonde angegeben, welche ein Messseil und eine Sondenendvorrichtung aufweist. Die Sondenendvorrichtung kann unabhängig von dem Messseil bereitgestellt werden und mag beim Herstellen der Seilsonde mit dem Messseil verbunden werden, indem sie dazu eingerichtet ist, das Messseil und insbesondere einen Messseilendabschnitt oder einen Endabschnitt des Messseils aufzunehmen, um die Seilsonde zu bilden. Das Messseil weist einen vorgebbaren Querschnitt auf. Die Sondenendvorrichtung weist einen Sondenendkörper mit einer Aufnahmeöffnung für einen Endabschnitt des Messseils auf. Die Aufnahmeöffnung weist eine Wandung auf, welche eingerichtet ist, einen Verlauf eines in die Aufnahmeöffnung eingesteckten Endabschnitts des Messseils vorzugeben. Die Wandung ist weiter eingerichtet, den in die Aufnahmeöffnung eingesteckten Endabschnitt des Messseils von zumindest einer Begrenzung oder Oberfläche des Sondenkörpers zu beabstanden.

Allgemein mag der Endabschnitt des Messseils oder der Messseilendabschnitt auch als Messseilende bezeichnet werden, obwohl das Messseilende eigentlich das Ende des Messeilendabschnitts, das äußerste Ende des Messseils oder das entfernte Ende des Messseils bezeichnet.

In einem Beispiel mag die Seilsonde ein Messseil mit einem vorgebbaren Querschnitt aufweisen. Die Sondenendvorrichtung kann einen Sondenendkörper oder Sondenkörper mit einer Aufnahmeöffnung für einen Endabschnitt des Messseils oder für ein Messseilende aufweisen. Der Sondenendkörper weist ferner einen Hohlraum auf, der sich an die Aufnahmeöffnung anschließt. In anderen Worten ist ein Durchgang von einer Umgebung des Sondenendkörpers in das Innere des Sondenendkörpers und insbesondere in den Hohlraum des Sondenendkörpers im Wesentlichen nur durch die Aufnahmeöffnung möglich. Der Hohlraum in dem Sondenendkörper nimmt den Endabschnitt des Messseils, den Messseilendabschnitt oder das Messseilende auf, wenn das Messseil in den Sondenendkörper eingesteckt ist. Die Aufnahmeöffnung kann derart an den Querschnitt des Messseils angepasst sein, dass die Aufnahmeöffnung mit dem Messseil verschließbar oder abdichtbar ist, sodass der Hohlraum gegenüber einer Umgebung abtrennbar ist, wenn das Messseil in den Hohlraum eingesteckt ist. In anderen Worten mag die Aufnahmeöffnung derart an den Querschnitt des Messseils angepasst sein, dass durch Einstecken des Messseils in die Aufnahmeöffnung ein Abdichten des Hohlraums gegenüber einem Außenbereich ermöglicht wird.

In einem anderen Beispiel mögen vorgebbare Messseile mit standardisierten Querschnittsflächen und Querschnittsformen existieren, sowie mit vorgebbaren Seillängen. Zu jedem dieser vorgebbaren Messseile oder Messeilformen, die durch einen Messeiltyp angegeben sein können, mag eine passende Sondenendvorrichtung existieren.

Der Hohlraum ist von der Wandung der Aufnahmeöffnung ausgeformt und weist eine Länge auf, welche größer ist als die Länge, welche dem senkrechten Abstand von der Aufnahmeöffnung zu einer gegenüber angeordneten Begrenzung des Sondenkörpers entspricht. Die Begrenzung kann eine Außenfläche und/oder eine Mantelfläche des Sondenendkörpers sein. Die Begrenzung ist eingerichtet, den Hohlraum gegenüber der Umgebung im Wesentlichen abzutrennen. In einem Beispiel mag im Bereich der Aufnahmeöffnung die dickste Stelle des Sondenendkörpers sein. Der Sondenendkörper kann, wegen dieser Abtrennwirkung oder der Isolationswirkung, den einsteckenden Endabschnitt des Messseils von einer Umgebung und insbesondere von einem in der Umgebung vorhandenem Material und/oder einer Atmosphäre isolieren. So mag der Sondenendkörper einen direkten Kontakt des eingesteckten Endabschnitts des Messseils mit einer Atmosphäre oder mit einem Füllgut verhindern.

Der vorgebbare Querschnitt kann jede beliebige Form aufweisen, beispielsweise eine Kreisform mit einer runden Querschnittsfläche. Der Querschnitt, für den die Aufnahmeöffnung vorgesehen ist, mag die Querschnittsfläche der Aufnahmeöffnung bestimmen.

Nach dem Einführen des Messseils in den Hohlraum, kann der Hohlraum ganz oder teilweise mit dem Messseil ausgefüllt sein. Um ein Aufschwimmen eines mit Luft gefülltem Sondenendkörpers zu verhindern, kann derjenige Hohlraum, der nicht von dem Messseil ausgefüllt wird, von einem Füllmaterial mit hoher Dichte aufgefüllt sein. Dieses Füllmaterial kann beispielsweise eine große Masse aufweisen, um das Gewicht des Sondenendkörpers zu erhöhen. Der Hohlraum mag ein Volumen aufweisen, das gleich oder größer ist als das Volumen, welches den eingesteckten Endabschnitt des Messseils oder den eingesteckten Messeilendabschnitt aufweist.

Die Länge und die Querschnittsfläche des Messseils bestimmen das notwendige Mindestvolumen des Hohlraums. Unter der Voraussetzung, dass sich die Querschnittsfläche des eingesteckten Messseils im Inneren des Sondenkörpers nicht verjüngt sondern konstant bleibt oder sich vergrößert, mag das Mindestvolumen des Hohlraums durch die einzusteckende Länge des Messseilendabschnitts und die Querschnittsfläche des Messseils vorgegeben sein, wobei das Mindestvolumen mindestens notwendig ist, um den Messseilendabschnitt aufzunehmen.

Da die Länge des eingesteckten Messeilendabschnitts länger sein soll als die Länge, die einer Dicke des Sondenendkörpers entspricht, mag der Hohlraum für ein Messseil mit rundem Querschnitt ein Volumen aufweisen, welches größer ist, als das Volumen eines Zylinders mit einer Grundfläche, welche dem Querschnitt der Aufnahmeöffnung entspricht, und einer Länge, welche dem senkrechten Abstand von der Aufnahmeöffnung zu einer gegenüber angeordneten Begrenzung des Sondenkörpers entspricht.

Gemäß der vorliegenden Erfindung weist die Seilsonde ein Messseil auf, welches zum Führen einer Mikrowelle oder einer Radarwelle ausgeführt ist.

Im eingesteckten Zustand, in dem das Messseil in die Aufnahmeöffnung eingesteckt ist, mag die Wandung der Aufnahmeöffnung den Verlauf des Messseils bestimmen. Insbesondere mag die Wandung des Sondenendkörpers und insbesondere die Wandung der Aufnahmeöffnung so ausgebildet sein, dass sie einen Verlauf des Messeilendabschnitts vorgibt. Die Wandung mag dafür sorgen, dass der Verlauf des Messseilendabschnitt vorgebbar wird und nicht seinem natürlichen Verlauf folgt, den es beispielsweise bei Einwirkung der Schwerkraft einnehmen würde. Die Wandung mag dafür sorgen, dass der Messeilendabschnitt gegenüber einer vorgebbaren Außenfläche des Sondenendkörpers beabstandet wird. So mag die Wandung des Sondenendkörpers als Isolator genutzt werden können. Beispielsweise mag ein von der unteren Oberfläche beabstandetes Messseil daran gehindert werden, mit einer Metalloberfläche eines unter der unteren Oberfläche angeordneten Behälterbodens in Kontakt zu gelangen.

In einem Beispiel kann mittels des eingesteckten Messseils der Hohlraum oder Innenraum des Sondenendkörpers abgedichtet werden. Der Hohlraum mag ferner in dem eingesteckten Zustand ganz oder teilweise von dem Messseilendabschnitt ausgefüllt sein. Die Aufnahmeöffnung des Sondenendkörpers kann in einem Beispiel so an den Querschnitt des Messseils angepasst sein, dass sich beim Einstecken des Messseils in die Aufnahmeöffnung eine Presspassung ergibt. Eine solche Presspassung kann beispielsweise dadurch erzeugt werden, dass der Querschnitt der Aufnahmeöffnung kleiner als der Querschnitt des Messseils ist. Die Presspassung kann durch temporäres Erwärmen vor dem Einstecken des Messseils in die Aufnahmeöffnung der Sondenendvorrichtung hergestellt werden und dafür sorgen, dass das Messseilende durch Reibkräfte von der Aufnahmeöffnung und/oder von der Hohlraumwandung im Inneren der Sondenendvorrichtung gehalten wird.

Gemäß einem weiteren Aspekt der vorliegenden Erfindung wird ein Füllstandmessgerät beschrieben. Das Füllstandmessgerät weist eine Elektronikeinrichtung und die erfindungsgemäße Seilsonde auf. Die Elektronikeinrichtung ist mit dem Messseil verbunden und zum Senden und/oder zum Empfangen einer elektromagnetischen Welle ausgebildet. In einem Beispiel kann die Elektronikeinrichtung auch eine Auswerteeinrichtung aufweisen, um beispielsweise eine Messkurve oder Echokurve aus den gesendeten und/oder empfangenen Signalen zu erzeugen und auszuwerten. Zum Auswerten der Echokurve mag die Elektronikeinrichtung, insbesondere die Auswerteeinrichtung, Methoden der digitalen Signalverarbeitung anwenden und beispielsweise aus einer gemessenen Laufzeit eine Füllstandhöhe berechnen und zur Anzeige bringen. Gemäß einem anderen Aspekt der vorliegenden Erfindung wird ein Verfahren zum Herstellen der erfindungsgemäßen Seilsonde angegeben. Das Verfahren weist das Bereitstellen eines Sondenendkörpers und das Erstellen einer Aufnahmeöffnung für das Einstecken eines Endabschnitts eines Messseils in den Sondenendkörper auf. Ferner weist das Verfahren das Formen einer Wandung der Aufnahmeöffnung und/oder des Sondenendkörpers derart auf, dass die Wandung einen Verlauf des in die Aufnahmeöffnung eingesteckten Messseilendabschnitts vorgeben kann. Die Wandung wird auch derart geformt, dass sie den in die Aufnahmeöffnung eingesteckten Messseilendabschnitt von zumindest einer Begrenzung, einer Oberfläche und oder einer Mantelfläche des Sondenendkörpers beabstandet.

In einem Beispiel weist das Verfahren das Erstellen des erfindungsgemäß vorhandenen Hohlraums in dem Sondenendkörper auf, wobei sich der Hohlraum an die Aufnahmeöffnung anschließt. Außerdem weist das Verfahren das Anpassen der Aufnahmeöffnung an den Querschnitt des Messseils derart auf, dass die Aufnahmeöffnung mittels dem Messseil verschließbar oder abdichtbar ist und dass der Hohlraum gegenüber einer Umgebung abtrennbar ist, wenn das Messseil in den Hohlraum eingesteckt ist.

Ferner kann das Verfahren beispielsweise das Ausbilden einer Länge des erfindungsgemäß vorhandenen Hohlraums aufweisen, welche größer ist als die Länge, welche dem senkrechten Abstand von der Aufnahmeöffnung zu einer gegenüber angeordneten Begrenzung des Sondenkörpers entspricht. Die Begrenzung und insbesondere die Wandung zwischen Begrenzung und Hohlraum ist eingerichtet, den Hohlraum gegenüber der Umgebung und/oder gegenüber einem in der Umgebung vorhandenem Füllgut im Wesentlichen abzutrennen. Bei der Begrenzung kann es sich um eine äußere Oberfläche oder um eine Mantelfläche des Sondenendkörpers handeln.

In einem Beispiel weist das Verfahren das Ausbilden eines Volumens des Hohlraums derart auf, dass das Volumen größer ist als das Volumen eines virtuellen Zylinders oder Vergleichszylinders, mit einer Grundfläche, welche dem Querschnitt der Aufnahmeöffnung entspricht, und mit einer Länge, welche dem senkrechten Abstand von der Aufnahmeöffnung zu einer gegenüber angeordneten Begrenzung des Sondenendkörpers entspricht, wobei die Begrenzung eingerichtet ist, den Hohlraum gegenüber der Umgebung im Wesentlichen abzutrennen.

Ferner mag ein computerlesbares Speichermedium angegeben werden, welches einen Programmcode aufweist, der, wenn er von einem Prozessor ausgeführt wird, das Verfahren zum Herstellen einer Sondenendvorrichtung oder Sondenvorrichtung ausführt.

Darüber hinaus mag ein Computerprogrammprodukt angegeben sein, welches einen Programmcode enthält, der, wenn er von einem Prozessor ausgeführt wird, den Prozessor dazu anleitet, das Verfahren zur Herstellung einer Sondenvorrichtung auszuführen.

Beispielsweise mag es sich bei dem Programmcode um Anweisungen für eine CNC-Maschine (Computerized Numerical Control) oder für einen 3D-Drucker handeln.

In Sensoren, welche nach dem Messprinzip "geführtes Radar" oder "geführte Mikrowelle" arbeiten, werden häufig Messsonden oder Sondenvorrichtungen eingesetzt, welche ein Messseil und ein Straffgewicht, Zentriergewicht oder eine Sondenendvorrichtung aufweisen. Durch das bei Seilmesssonden oder bei einer entsprechenden Sondenvorrichtung zum Straffhalten des Seiles benutzte Sondengewicht kann es zu Störungen von Messungen im Bereich eines Sondenendes kommen, welches mit dem Sondengewicht verbunden ist. Zu Messstörungen kann es im Bereich eines Sondenendes kommen, welches einem Ende eines Messseils gegenüber liegt, welches Ende mit einer Elektronikeinrichtung verbunden ist. Die Störungen können durch Inhomogenitäten an dem Übergang von dem Messseil zu dem Sondengewicht hervorgerufen werden, die beispielsweise durch das Anbringen des Gewichtes an dem freien Sondenende entstehen. Störend kann sich beispielsweise eine abrupte Verdickung im Übergangsbereich von dem Querschnitt des Messseils zu dem Querschnitt des Sondengewichts auswirken, welche Verdickung vorgesehen wird, um ein möglichst hohes Gewicht am Sondenende zu erzeugen, insbesondere wenn das Sondengewicht massiv aus Vollmaterial ausgebildet ist. Ein inhomogener Übergang oder eine Verdickung oder eine Verformung kann das HF (Hochfrequenz)-Verhalten einer Messsonde dahingehend beeinflussen, dass ungewünschte Störechos auftreten. Störungen können aber auch entstehen, wenn das Messseil mit einem ungewünschten anderen Objekt in Berührung kommt, beispielsweise mit einer Behälterwand.

Ein Störecho mag ein Echo sein, welches in einer gemessenen Echokurve sichtbar ist, welches jedoch nicht mit einem gewünschten Messobjekt im Zusammenhang steht, wie beispielsweise mit dem Füllstand oder mit dem Übergang zwischen unterschiedlichen Materialien. Ein Nutzecho ist hingegen ein Echo, welches von einer Inhomogenität erzeugt wird, deren Eigenschaft oder Lage von Interesse ist. Ein Nutzecho ist beispielsweise ein Echo, das von einem Füllstand oder von einer Grenzfläche zwischen zwei oder mehreren Materialien herrührt.

Das Störecho wird zu einem störenden Faktor, wenn es einen Einfluß auf das interessante Nutzecho hat. Störechos, die in weiter Entfernung von dem Nutzecho liegen können deutlich von einem Nutzecho unterschieden werden.

Eine weitere Form von Echo ist ein Echo, welches am Ende des Messseils und insbesondere am entferntesten oder äußersten Ende des Messseils entsteht, d.h. am im Wesentlichen offenen Ende des Messeilendabschnitts. Dieses Endeecho kann einerseits genutzt werden das Ende des Messseils in einer Echokurve zu identifizieren und kann daher als Nutzecho qualifiziert werden. Andererseits kann es sich jedoch auf ein von dem Füllstand hervorgerufenes Nutzecho auswirken und damit die Erkennung des Nutzechos stören. Somit kann das Endeecho einen nützlichen und einen störenden Effekt haben.

Insbesondere wenn der Füllstand im Bereich des Messseilendes liegt und das Messseil im Wesentlichen senkrecht verläuft, kann es zu der störenden Wirkung des Endeechos kommen. Gerade bei niedrigen Füllständen liegen das Endeecho und das Füllstandecho nahe beisammen, so dass ein Totbereich entstehen kann, in dem das Endeecho einen so großen Einfluss auf das Füllstandecho hat, dass eine Füllstandmessung nicht möglich ist. Der Totbereich kann in einer Größenordnung von 90 mm liegen, so dass bei einer Verwendung solch einer Messsonde unter der Annahme der Ausnutzung der gesamten Behälterhöhe als Messeillänge trotzdem nur ein Füllstand über 90mm vom Behälterboden bestimmbar ist. Es mag erwünscht sein, eine Seilsonde mit einem möglichst geringen Totbereich zu schaffen.

Ein Totbereich mag die Länge eines Messseilendabschnitts bezeichnen, die mindestens notwendig ist, um einen ausreichend langen Endabschnitt eines Messseils zu erzeugen, sodass das an dem entfernten Ende des Messseils entstehende Störecho nicht ein von dem Füllstand hervorgerufenes Nutzecho beeinflusst, zuzüglich einer Länge, die von einem Behälterboden bis zu dem entfernten Messeilende reicht. In anderen Worten mag ein Totbereich von 90 mm bedeuten, dass das Ende einer Messsonde mindestens 90 mm in das Füllgut eintauchen muss, um ein Nutzecho zu erzeugen, welches von dem Störecho unterschieden werden kann, das von dem Sondenende hervorgerufen wird. Diese Annahme sollte insbesondere dann erfüllt sein, wenn es sich bei dem Füllgut um ein schwach reflektierendes Material handelt.

Bei einer geraden Führung des Messseils entsteht das Endeecho im Wesentlichen in einer Distanz zu der Elektronikeinrichtung oder Einkoppeleinrichtung, welche der Sondenlänge entspricht, die von der Messseillänge und/oder der Länge der Sondenendvorrichtung oder des Sondengewichts bestimmt wird. Durch konstruktive Varianten und Formungen des Sondengewichts können die Störeinflüsse, der von den Störstellen hervorgerufenen Störechos minimiert werden, sodass ein gewünschtes Nutzecho deutlicher von einem Störecho unterscheidbar ist. Um das Sondengewicht konstruktiv zu verändern, können Sondengewichte unterschiedlicher Länge, unterschiedlicher Durchmesser und unterschiedlicher Massen genutzt werden. Jedoch mag sich selbst durch die Variation der Form der Sondengewichte bei schwach reflektierenden Füllgütern lediglich ein Totbereich in der Größenordnung von 90 mm erreichen lassen.

Es mag daher als ein Aspekt der Erfindung betrachtet werden, bei geringer Eintauchtiefe in ein Füllgut, insbesondere bei einer Eintauchtiefe von weniger als 90 mm einen großen Abstand zwischen Eintauchstelle, also dem Füllstand, und dem Sondenende herbeizuführen. In anderen Worten mag es gewünscht sein, das Ende eines Messseils, und damit das von dem entfernten Ende des Messseils hervorgerufene Störecho, möglichst weit von einer Stelle zu entfernen, bei der ein Messseil in das Füllgut eintaucht. Bei diesem Entfernen mag jedoch zu beachten sein, dass das Messeil nicht mit einer Behälterwandung in Berührung kommt. Die erfindungsgemäße Sondenendvorrichtung soll daher so beschaffen sein, dass der Abstand zwischen dem entfernten Messseilende und einer Eintauchposition in ein Füllgut künstlich verlängert wird. Trotz der Verlängerung des Abstandes wird das Messeilende von einer Störstelle ferngehalten oder isoliert, beispielsweise von einer Behälterwandung. Durch die künstliche Verlängerung kann die in der Echokurve dargestellte Position des am entfernten Messeilende auftretenden Störechos von der Position des Nutzechos, das durch die Grenzfläche des Füllstandes hervorgerufenen wird, so weit auseinander gezogen werden, dass sich die beiden Echos in der Echokurve im Wesentlichen nicht beeinflussen. Für das Auseinanderziehen mag der physikalische Effekt ausgenutzt werden, dass sich die geführte elektromagnetische Welle im Wesentlichen unabhängig von der Form des Messseils entlang des Messseils ausbreitet und die für diese Ausbreitung benötigte Laufzeit als Grundlage für eine in der Echokurve dargestellte Position eines Echos genutzt wird.

Eine Verlängerung des Messseils ohne den Behälterboden und/oder ohne eine Behälterwandung zu berühren kann dadurch erreicht werden, dass der Messseilendabschnitt möglichst weit innerhalb einer Sondenendvorrichtung, insbesondere innerhalb eines Straffgewichts und/oder innerhalb eines Zentriergewichts verstaut wird. Der Sondenendkörper der Sondenendvorrichtung mag so eingerichtet sein, dass er den Verlauf des Messseilendabschnitts vorgeben kann und/oder den Messseilendabschnitt gegenüber einer Störstelle isoliert oder beabstandet.

In einem Beispiel mag der Sondenendkörper so eingerichtet sein, dass das Füllgut zumindest teilweise mit dem eingesteckten Messseil in Kontakt treten kann. In einem anderen Beispiel mag der Sondenendkörper der Sondenendvorrichtung für das Aufnehmen des Messseilendabschnitts so eingerichtet sein, dass der Verlauf des Messseils vorgebbar ist, und dass der Sondenendkörper das Messseil gegenüber der Umgebung und insbesondere gegenüber dem Füllgut und/oder gegenüber einem Behälterboden im Wesentlichen abgetrennt, beabstandet oder isoliert.

Gemäß einem Aspekt der vorliegenden Erfindung bildet die Wandung einen Hohlraum innerhalb des Sondenendkörpers aus, wobei sich der Hohlraum an die Aufnahmeöffnung anschließt. Die Aufnahmeöffnung ist derart an den Querschnitt des Messseils angepasst, dass die Aufnahmeöffnung mit dem Messseil verschließbar ist, so dass der Hohlraum gegenüber einer Umgebung abtrennbar ist, wenn das Messseil in dem Hohlraum eingesteckt ist. Der Hohlraum weist eine Länge auf, welche größer ist als die Länge des senkrechten Abstands von der Aufnahmeöffnung zu einer gegenüber der Aufnahmeöffnung angeordneten Begrenzung des Sondenendkörpers. Die Begrenzung ist eingerichtet, den Hohlraum gegenüber der Umgebung im Wesentlichen abzutrennen. Die Begrenzung mag in einem Beispiel die Oberfläche des Sondenendkörpers sein.

Dadurch, dass der Hohlraum mittels des Messseils verschließbar ist, kann ein Füllgut von dem Messseil ferngehalten werden, wodurch die Ausbreitung einer von dem Messseil geführten elektromagnetischen Welle im Wesentlichen nicht von dem Füllgut beeinflusst wird.

Gemäß einem anderen Aspekt der vorliegenden Erfindung sind der Sondenkörper, die Wandung und/oder der Hohlraum in dem Sondenkörper derart eingerichtet, dass durch den Sondenkörper und/oder durch den Hohlraum eine Verlaufsform des eingesteckten Messseilendabschnitts vorgebbar ist.

Da das Messseil und insbesondere eine Messsonde möglichst die gesamte Länge im Inneren eines Behälters erfassen soll, mag die Länge des Messseils so gewählt sein, dass sie im Wesentlichen der Behälterhöhe entspricht. Dadurch mag ein frei bewegliches Sondenende nahe an einem Behälterboden positioniert werden. Das Messseil kann aus Drahtgeflecht oder einem anderen flexiblen hergestellt sein. Folglich würde sich der Messseilendabschnitt möglichst lange erstrecken, wenn das Ende frei der Schwerkraft überlassen wird.

Durch den Hohlraum und/oder durch die Wandung in der Sondenendvorrichtung kann sich der Verlauf eines sonst losen Endes jedoch derart beeinflussen lassen, dass das Ende von der Begrenzung des Sondenendkörpers und somit auch von dem Behälterboden ferngehalten, beabstandet oder isoliert wird. Es wird durch die Beeinflussung des Verlaufes verhindert, dass das Messseilende die gesamte Länge eines Behälters ausfüllt, wie es bei einem unkontrollierten Aussetzen des Messseilendes der Schwerkraft der Fall wäre. Die Sondenendvorrichtung bildet eine Plattform, die den Messseilendabschnitt vom Behälterboden und/oder von einer Behälterwandung fern hält oder isoliert und deren Gewicht gleichzeitig zur Straffung des übrigen Messseils beiträgt. So kann auch ein Verlauf des Messseilendabschnitts erzeugt werden, der parallel zu einem Behälterboden oder auch entgegen der Schwerkraft gerichtet ist. Auf diese Art und Weise mag es möglich sein, den Endabschnitt eines Messseils zu verlängern, ohne dass es an den durch die Behälterhöhe vorgegebenen Behälterboden anstößt, aber dennoch länger als die Behälterhöhe ist. Die Sondenendvorrichtung mag es ermöglichen, dass ein außerhalb der Sondenendvorrichtung angeordneter Messeilabschnitt von dem Gewicht der Sondenendvorrichtung und/oder dem darin liegendem Messseilendabschnitt straff gespannt wird, während der innerhalb der Sondenendvorrichtung verlaufende Endabschnitt des Messseils ungespannt oder schlaff ist.

Gemäß einem anderen Aspekt der vorliegenden Erfindung weist der Hohlraum eine Länge und den Querschnitt der Aufnahmeöffnung auf, wobei der Querschnitt des Hohlraums über die gesamte Länge des Hohlraums dem Querschnitt der Aufnahmeöffnung entspricht.

Auf diese Art und Weise mag der Hohlraum im Wesentlichen dem Verlauf des Messseilendabschnitts entsprechen und kann die Form des Messseilendabschnitts beeinflussen, ohne einen mit Luft gefüllten Hohlraum zu erzeugen, der nur ein geringes Gewicht für den Sondenendkörper erzeugt. Beispielsweise kann der gesamte Hohlraum als Presspassung ausgebildet sein, sodass der Hohlraum alleine eine so gute Befestigung für den Messseilendabschnitt ausbilden kann, dass eine Befestigungseinrichtung am entfernten Ende des Messseils nicht nötig ist.

Alternativ kann auch mehr Material des Sondenkörpers entnommen sein, als für die Unterbringung des Messseilendabschnitts notwendig ist, und der Messseilendabschnitt befindet sich lose innerhalb des Hohlraums, sodass der Messseilendabschnitt zwar im Wesentlichen nur durch die von der Aufnahmeöffnung gebildete Presspassung im Inneren des Sondenkörpers gehalten wird, jedoch die Form des Verlaufs des Messseilendabschnitt im Inneren des Hohlraums nicht vorgegeben ist.

Gemäß einem anderen Aspekt der vorliegenden Erfindung weist der Sondenkörper ein vorgebbares Gewicht auf. In Abhängigkeit von dem Einsatz des Sondenkörpers, insbesondere in Abhängigkeit von der Dichte des zu messenden Füllgutes, mag eine mehr oder weniger schwere Sondenendvorrichtung benötigt werden. Das Gewicht der Sondenendvorrichtung kann durch die Größe des Hohlraums aber auch durch die Größe des Sondenkörpers und/oder die Dichte des Materials des Sondenkörpers beeinflusst werden, sodass für verschiedene Messseile und verschiedene Einsatzzwecke verschieden schwere Sondenendvorrichtungen bereitgestellt werden können.

Gemäß der vorliegenden Erfindung ist der Hohlraum L-förmig, U-förmig, und/oder schneckenförmig ausgebildet. Diese unterschiedlichen Formen des Hohlraums erlauben es, den Messseilendabschnitt von einer lotrechten Position, die zum Anstoßen des Messseilendes an einen Behälterboden führen könnte, abweichen zu lassen und eine andere Raumrichtung für die Verlängerung des Messseilendabschnitts zu verwenden. Beispielsweise mag sich der Messseilendabschnitt durch einen schneckenförmig ausgebildeten Hohlraum in einer parallel zum Behälterboden verlaufenden Ebene spiralförmig aufwickeln lassen und somit den zur Verfügung stehenden Bereich gut ausfüllen. Folglich mag sich nicht nur eine entlang der Schwerkraft verlaufende Strecke des Messseils als Länge für die Ausbreitung der elektromagnetischen Welle nutzen lassen, sondern auch ein horizontal zur Schwerkraftrichtung verlaufender Bereich des Messseils, der durch den Sondenkörper in dieser Position gehalten wird.

Gemäß einem anderen Aspekt der vorliegenden Erfindung ist der Sondenkörper aus Kunststoff, beispielsweise PTFE (Polytetrafluorethylen), PP (Polypropylen), PE (Polyethylen), PEEK (Polyetheretherketon), Keramik und/oder aus Metall hergestellt. Durch die Materialwahl kann das Gewicht der Sondenendvorrichtung beeinflusst werden.

Gemäß noch einem anderen Aspekt der vorliegenden Erfindung weist der Hohlraum eine Befestigungseinrichtung oder eine Seilfixierung für ein entferntes Messseilende auf.

Wenn die Aufnahmeöffnung und insbesondere die Wandung der Aufnahmeöffnung sehr dünn realisiert ist, mag die durch die Abdichtung oder Einpressung hervorgerufene Presskraft der Aufnahmeöffnung nicht ausreichen, um die Sondenendvorrichtung an dem Messseil festzuhalten. Um bei solch einer Konstruktion eine ausreichende Stabilität zu erzeugen, kann in dem Hohlraum eine Befestigungseinrichtung für das Messseilende vorgesehen sein. Diese Befestigungseinrichtung kann eine Klemme oder beispielsweise eine Schraube aufweisen, mit der sich das Messseilende fixieren lässt.

Gemäß einem anderen Aspekt der vorliegenden Erfindung weist der Sondenkörper eine Zentriereinrichtung und/oder eine Beabstandungseinrichtung auf, wobei die Zentriereinrichtung und/oder die Beabstandungseinrichtung eingerichtet ist/sind, ein in den Sondenkörper eingestecktes Messseil in einer vorgebbaren Position zu halten.

Beispielsweise kann eine Zentriereinrichtung als eine Scheibe mit definiertem Durchmesser ausgebildet sein. In einem anderen Beispiel kann eine Beabstandungseinrichtung als Becher oder Zylinder ausgebildet sein, in dessen Mitte koaxial das Messseil verläuft. Die Zentriereinrichtung und die Beabstandungseinrichtung können zusammenwirken, um das Seil in der vorgebbaren Position zu halten. Somit kann das Messseil beispielsweise in einem vorgebbaren Abstand von einem Randbereich der Sondenendvorrichtung fixiert werden. Diese Beabstandung kann hilfreich sein, wenn das Messseil in einem Standrohr befestigt werden soll und das Messseil in einer möglichst zentralen oder koaxialen Lage gehalten werden soll.

Gemäß einem anderen Aspekt der vorliegenden Erfindung ist der Sondenendkörper und/oder die Beabstandungseinrichtung scheibenförmig, tonnenförmig, sternförmig und/oder speichenradförmig ausgebildet. In einem anderen Beispiel ist der Sondenendkörper und/oder die Beabstandungseinrichtung als Kunststoffsteg ausgebildet.

Die verschiedenen Ausbildungsformen des Sondenendkörpers oder der Seilführung erlauben es, das Gewicht des Sondenendkörpers zu beeinflussen. Andererseits kann es durch eine speziell angepasste Form aber auch ermöglicht werden, dass Zwischenräume in dem Sondenendkörper geschaffen werden, die ein leichtes Umgeben des Sondenendkörpers mit dem Füllgut ermöglichen, ohne dass dabei ein direkter Kontakt mit dem Messseilende im Inneren des Sondenendkörpers entsteht. Auf diese Weise kann ein scheiben- oder sternförmiger Sondenkörper dafür sorgen, dass das Füllgut zwischen den Speichen leicht hindurchdringen kann und das Messseilendabschnitt umspühlen, ohne in direkten Kontakt mit dem Messseilendabschnitt zu gelangen. Im Gegensatz zu einem massiven Sondengewicht kann ein durchlässiger Sondenendkörper einen Füllstand in das Sondengewicht eindringen lassen und eine Messung des Füllstandes nahe der Aufnahmeöffnung zulassen und somit einen Totbereich am Sondenende klein halten. Ist das Sondengewicht oder die Sondenendvorrichtung als ein massiver Kegel ausgebildet, so kann ein Nutzecho im Wesentlichen nur in dem Bereich oberhalb des Kegels, in dem das Messseil in den Kegel eintritt, ermittelt werden. Nur dieser Bereich oberhalb des Kegels mag in Kontakt mit dem Füllgut treten. Daher kann die Höhe des von dem Sondengewicht isolierten Bereichs die Ausdehnung des Totbereichs beeinflussen.

In einem anderen Beispiel mag auch der Sondenendkörper durchlässig für das Füllgut sein, so dass das Füllgut auch zumindest teilweise mit dem Messseil in Kontakt treten kann.

Gemäß noch einem anderen Aspekt der vorliegenden Erfindung ist die Seilsonde für die Verwendung in einem Behälter mit einer vorgebbaren Behälterhöhe eingerichtet. Jedoch weist das Messseil eine Länge auf, welche größer ist als die vorgebbare Behälterhöhe und/oder eine vorgebbare Sondenlänge.

Die Sondenendvorrichtung mag die Länge des Messseilendabschnitts, welche über die Behälterhöhe und/oder Sondenlänge hinausgeht, von dem Behälterboden fernhalten. Durch das Fernhalten beabstandet sich ein vom entfernten Ende des Messseils hervorgerufenes Störecho in einer Echokurve weiter von einer Eintauchstelle des Messseils in ein Füllgut und es kann ein Messseil verwendet werden, das länger als die Behälterhöhe ist.

Gemäß einem anderen Aspekt der vorliegenden Erfindung weist das Messseil ein zweites Ende auf, wobei das zweite Ende eine Einkoppeleinrichtung für eine elektromagnetische Welle aufweist. Während das erste Ende von der Einkoppeleinrichtung entfernt ist und daher als entferntes Ende bezeichnet wird, liegt das zweite Ende nahe bei der Einkoppeleinrichtung und wird nahes Ende bezeichnet.

Die Einkoppeleinrichtung mag als ein HF-Stecker ausgebildet sein, mit dem sich das Messseil an einer Elektronikeinrichtung ankoppeln lässt, wodurch die Elektronikeinrichtung eine elektromagnetische Welle in das Messseil einprägen oder einkoppeln kann. Das zweite Ende mag dem entfernten Ende gegenüber liegen, das der Reflexion des Messimpulses dient.

Gemäß noch einem anderen Aspekt der vorliegenden Erfindung ist das Feldgerät als ein Zweileitergerät ausgebildet.

Ein Zweileitergerät weist eine Zweileiterverbindung oder Zweidrahtverbindung auf, wobei die Zweileiterverbindung genau zwei elektrische Leitungen aufweist. Die Zweileiterverbindung oder die Zweidrahtleitung ist zur Kommunikation, insbesondere zur Ausgabe von zumindest einem Messwert ausgebildet, beispielsweise eines Füllstandmesswertes. Darüber hinaus kann über dieselbe Leitung das Feldgerät, insbesondere die Elektronikeinrichtung eines Feldgeräts, mit Energie versorgt werden. Das Feldgerät weist somit eine Zweidrahtleitung auf, über welche das Messgerät mit der für den Messbetrieb notwendigen Energie versorgt werden kann und über welche Messdaten an eine entfernte Steuereinheit oder Auswerteeinrichtung übertragen werden können.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt eine Schnittdarstellung eines scheibenförmigen Sondenendkörpers gemäß einem exemplarischen Ausführungsbeispiel der vorliegenden Erfindung.
Fig. 2 zeigt eine Schnittdarstellung eines U-förmigen Sondenendkörpers gemäß einem exemplarischen Ausführungsbeispiel der vorliegenden Erfindung.
Fig. 3 zeigt eine Schnittdarstellung des Sondenendkörpers aus Fig. 1 in einem Behälter zusammen mit einer Echokurve gemäß einem exemplarischen Ausführungsbeispiel der vorliegenden Erfindung.
Fig. 4 zeigt eine Querschnittsdarstellung eines Messaufbaus mit einem Feldgerät aus Fig. 1 und einem Standrohr gemäß einem exemplarischen Ausführungsbeispiel der vorliegenden Erfindung.
Fig. 5 zeigt eine Qualitätsmesskurve für eine Seilsonde gemäß einem exemplarischen Ausführungsbeispiel der vorliegenden Erfindung.
Fig. 6 zeigt eine Querschnittsdarstellung einer weiteren Sondenanordnung gemäß einem exemplarischen Ausführungsbeispiel der vorliegenden Erfindung.
Fig. 7 zeigt einen Detailausschnitt des Straffgewichts der Sondenanordnung aus Fig. 6 gemäß einem exemplarischen Ausführungsbeispiel der vorliegenden Erfindung.
Fig. 8 zeigt eine Seitenansicht einer Messvorrichtung mit der Sondenanordnung aus Fig. 6 gemäß einem exemplarischen Ausführungsbeispiel der vorliegenden Erfindung.
Fig. 9 zeigt eine Seitenansicht einer Messvorrichtung mit der in Fig. 6 dargestellten Sondenanordnung ohne Standrohr gemäß einem exemplarischen Ausführungsbeispiel der vorliegenden Erfindung.
Fig. 10 zeigt einen Querschnitt der in Fig. 8 dargestellten Messvorrichtung gemäß einem exemplarischen Ausführungsbeispiel der vorliegenden Erfindung.
Fig. 11 zeigt ein Flussdiagramm für ein Verfahren zum Herstellen einer Sondenvorrichtung gemäß einem exemplarischen Ausführungsbeispiel der vorliegenden Erfindung.

### Detaillierte Beschreibung von Ausführungsbeispielen

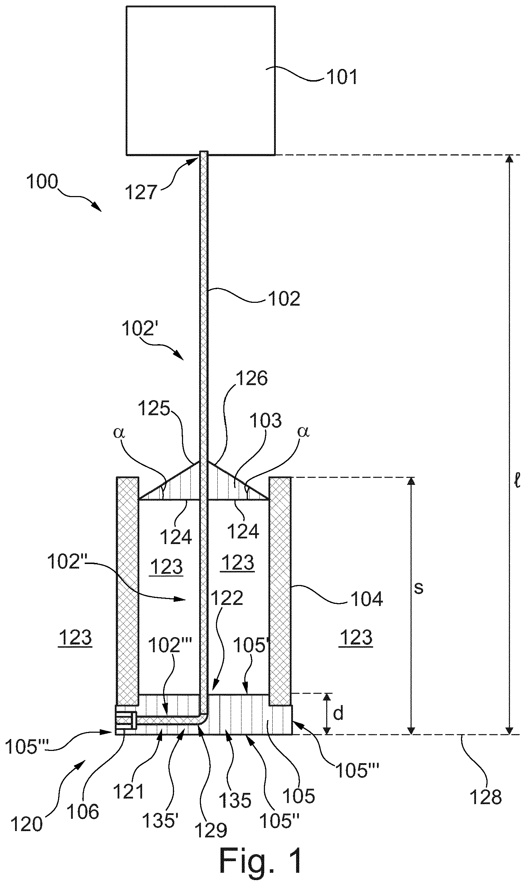

Die Darstellungen in den Figuren sind schematisch und nicht maßstäblich. In der folgenden Beschreibung der Fig. 1 bis Fig. 11 werden die gleichen Bezugsziffern für gleiche oder sich entsprechende Elemente verwendet.

Fig. 1 zeigt eine Schnittdarstellung einer Seilsonde mit scheibenförmigem Sondenendkörper 105 gemäß einem exemplarischen Ausführungsbeispiel der vorliegenden Erfindung. Das Feldgerät 100 weist im Wesentlichen die drei Bestandteile Elektronikeinrichtung 101, Messseil 102 und Sondenendvorrichtung 120 auf. Da die Sondenendvorrichtung 120 eine vorgebbare Masse aufweist, kann die Sondenendvorrichtung 120 auch als Straffgewicht 120, Gewichtskörper 120 oder Zentriergewicht 120 bezeichnet werden. Das Messseil 102 bildet zusammen mit dem Straffgewicht 120 eine Seilsonde 102, 120. In Fig. 1 ist das Straffgewicht 120 tonnenförmig ausgebildet. Das Straffgewicht 120 könnte auch lediglich den Sondenendkörper 105 oder die Seilführung 105 aufweisen, um seine Funktion des Beschwerens und/oder des Führens des Seilendes zu erfüllen. Das Straffgewicht 120 aus Fig. 1 weist zusätzlich zu der Seilführung 105, die Seilzentrierung 103 oder Zentriereinrichtung 103 und die Zentrierhülse 104 oder Beabstandungseinrichtung 104 auf.

Die Seilführung 105 oder der Sondenendkörper 105 ist aus einem anderen Material beschaffen als die Beabstandungseinrichtung 104, die als Zylinder senkrecht auf der Seilführung 105 angeordnet ist.

Das Messseil 102 lässt sich im Wesentlichen in drei Abschnitte einteilen, wobei das Messseil 102 selbst im Wesentlichen einstückig oder monolithisch gefertigt ist, beispielsweise als Drahtseil. Somit sind die drei Abschnitte lediglich als Bezeichnungen anzusehen, wohingegen das Messseil 102 frei von physikalischen Unterbrechungen entlang einer Longitudinalachse des Messseils 102 ist. Als erster Seilabschnitt 102' wird der Abschnitt zwischen der Elektronikeinrichtung 101 und der Seilzentrierung 103 bezeichnet. Der zweite Seilabschnitt 102" verläuft im Wesentlichen in einem von der Seilzentrierung 103 und der Zentrierhülse 4 und der Seilführung 105 gebildeten Hohlraum, der zu der Umgebung 123 der Seilführung 105 gehört und zumindest teilweise mit Füllgut gefüllt sein kann. Der dritte Seilabschnitt 102''' oder der Messseilendabschnitt 102''' verläuft im Wesentlichen vollständig im Inneren der Seilführung 105. Um das Seilende 102''' im Inneren der Seilführung 105 führen zu können, ist im Inneren der Seilführung 105 ein Hohlraum 121 ausgebildet, der sich von der Aufnahmeöffnung 122 an einer ersten Oberfläche 105' der Seilführung 105 bis zu der Seilfixierung 106 oder Befestigungseinrichtung 106 erstreckt. Der Verlauf des Messseils wird von der Form der Wandung 135, 135' bestimmt. In dem Fall, dass der Messseilendabschnitt 102''' in einem Hohlraum 121 geführt wird, stützt die Wandung 135, 135' im Wesentlichen den gesamten Verlauf des Messseilendabschnitts 102'''. Falls eine Seilfixierung 106 in dem Sondenendkörper 105 vorhanden ist, reicht der dritte Seilabschnitt 102''' von der Aufnahmeöffnung 122 bis zu der Seilfixierung 106. Die Wandung 135, 135' schließt sich direkt an die Aufnahmeöffnung 122 an und kann daher als eine Wandung der Aufnahmeöffnung 122 angesehen werden.

In dem Beispiel der Fig. 1 ist das Messseil 102 L-förmig ausgebildet. Der dritte Seilabschnitt 102''' weist einen Knick 129 auf. Im Gegensatz zu einem reinen senkrechten Verlauf, bei dem der Leitungsabschnitt 102''' im Wesentlichen vollständig parallel zur Mantelfläche der Zentrierhülse 104 bis an die zweite Oberfläche 105", die untere Oberfläche 105" oder die Begrenzung 105" des Sondenkörpers 105 verlaufen würde, kann durch die L-förmige Ausbildung eine lange Ausdehnung des dritten Seilabschnitts 102''' erreicht werden, ohne dass dieser Endabschnitt 102''' einen in Fig. 1 nicht gezeigten Behälterboden berührt. Die L-Form des Messseils wird durch ein Abknicken eines Bereichs des Endabschnitts 102''' erreicht. Der Knick 129 lässt das Messseil 102 aus der Richtung der Schwerkraft abweichen, welche in Fig.1 in Richtung der unteren Begrenzung 105" reicht. Dieser Knick 129 kann durch eine entsprechend geformte Wandung 135 erreicht werden. Durch das Abknicken aus dem lotrechten Verlauf kann erreicht werden, dass der Abstand von der Aufnahmeöffnung 122 bis zur Seilfixierung 106 oder bis zum entfernten Ende des Messseils entlang des Messseils 102 größer ist als der Abstand d, der einer Dicke der Seilführung 105 im Bereich Aufnahmeöffnung 122 entspricht. Die Dicke d würde bei einem rein senkrechten Verlauf des Messseils die maximale Länge des Endabschnitts 102''' darstellen, insbesondere, wenn die Aufnahmeöffnung 122 an dem dicksten Bereich der Seilführung 105 angeordnet ist. In anderen Worten weist der Sondenendkörper 105 eine Aufnahmeöffnung 122 für das Ende 102''' des Messseils 102 auf, durch die das Seilende 102''' in den Hohlraum 121 eingesteckt werden kann. Durch das Einstecken wird der Hohlraum im Wesentlichen gegenüber einer Umgebung 123 abgedichtet, so dass kein Material oder keine Materie aus der Umgebung 123 in das Innere 121 der Seilführung 105 eindringen kann. In der Fig. 1 ist in der Umgebung 123 kein Material vorhanden. Jedoch kann diese Umgebung 123 ein Füllgut aufweisen, wenn das Messgerät 100 in einen Füllgutbehälter eingebaut wird. Durch eine poröse oder durchlässige Ausgestaltung von zumindest einer Einrichtung ausgewählt aus der Zentriereinrichtung 103, der Beabstandungseinrichtung 104 und dem Sondenendkörper 105 kann Füllgut auch in den in Fig. 1 im Inneren der Beabstandungseinrichtung 104 dargestellten Hohlraum eindringen und somit an das Messseil 102 im Bereich des zweiten Seilabschnitts 102" gelangen. Das eindringende Füllgut kann ein Aufschwimmen der Sondenendvorrichtung 120 auf dem Füllgut verhindern.

Aufgrund des Knicks 129 wirkt auf den Endabschnitt 102''' eine Druckkraft oder eine Auflagerkraft, während auf den restlichen Abschnitt des Messseils eine Zugkraft wirkt.

Trotz dem Eindringen des Füllgutes in den Hohlraum, wird das Füllgut jedoch, wegen des passgenauen Einbaus des Messseils 102 in die Aufnahmeöffnung 122, von dem dritten Seilabschnitt 102''' ferngehalten. Da jedoch das Füllgut in dem zweiten Seilabschnitt 102" an das Messseil 102" gelangen kann, kann eine Messung nicht nur in dem Außenbereich des Sondengewichts 120, d. h. im obersten Seilabschnitt 102' erfolgen, sondern bereits im Inneren des Sondengewichts 120, d.h. im Bereich des mittleren Seilabschnitts 102". Ein Totbereich weist von einem Behälterboden, der in Fig. 1 nicht dargestellt ist, bis zu der Position, an der das Messseil 102 am frühesten mit dem Füllgut in Kontakt treten kann. Zusätzlich zu einem Abstand des Sondenendes 105" zu einem Behälterboden weist der Totbereich der in Fig. 1 dargestellten Messvorrichtung auch den Abschnitt d auf, d.h. die Dicke der Seilführung 105. Diese Dicke d ist jedoch kleiner als die Höhe s des Gewichtskörpers 120. Die Höhe d kann außerdem sehr klein ausgeführt werden, da aufgrund des Knickes in dem Messseil ein Seilende 106 weit von dem zweiten Seilabschnitt 102" entfernt liegen kann, um einen Störeinfluss des Seilendes zu reduzieren. Da ferner der Sondenboden 105" oder die untere Begrenzung 105" so ausgelegt wird, dass er/sie sehr nahe am Behälterboden zu liegen kommt, wird der Totbereich der Messsonde im Wesentlichen von der Dicke d der Seilführung 105 bestimmt.

Die Wandung 135, 135' beabstandet nicht nur den Endabschnitt 102''' des Messseils von dem Sondenboden 105" sondern auch von der seitlichen Begrenzung 105'''. Im Fall eines zylindrischen Sondenendkörpers ist die seitliche Begrenzung 105''' die umlaufende zylindrische Oberfläche des Sondenendkörpers 105. Allgemein beabstandet die Wandung 135, 135' den Endabschnitt 102''' des Messseils von der Mantelfläche 105', 105", 105''' des Sondenendkörpers 105.

Die Seilzentrierung 103 ist aus Kunststoff hergestellt, beispielsweise aus PTFE, PP, PE, PEEK, Keramik, und weist eine reflektionsarme Form auf. Eine reflektionsarme Form bedeutet dabei, dass derjenige Wert eines S-Parameters gering ist, der ein Maß für das Störecho angibt, das aufgrund der von der Seilzentrierung gebildeten Unstetigkeit hervorgerufen wird. Eine reflektionsarme Form, d. h. eine Form, die nur zu geringen Reflexionen führt, mag beispielsweise eine Form mit dreieckigem Querschnitt sein, wie in Fig. 1 dargestellt. Der dreieckige Querschnitt des rotationssymmetrischen Kegels weist zwischen den Schenkeln 124 und 125 bzw. zwischen den Schenkeln 124 und 126 einen Neigungswinkel α auf. Somit ergibt sich in dem Querschnitt eine dreieckige Form welche entgegen der Ausbreitungsrichtung der ausgesandten elektromagnetischen Welle eine Spitze mit einem stumpfen Winkel ausbildet. In Richtung der Wandung der Beabstandungseinrichtung 104 weist der Querschnitt der Zentriereinrichtung 103 spitze Winkel α auf. Der in Richtung der Beabstandungseinrichtung 104 gerichtete Winkel kann beispielsweise 30° oder 45° betragen oder im Bereich von 30 Grad bis 45 Grad liegen. Die Seilzentrierung 103 ist teilweise im Inneren der Zentrierhülse 104 angeordnet. Die Spitzen der Winkel zwischen der Grundlinie 124 oder Grundfläche 124 der Seilzentrierung 103 und dem Schenkel 125 bzw. dem Schenkel 126 liegt dabei an der Innenwandung der Zentrierhülse 104 an, die als Hohlzylinder ausgebildet ist. Die Seilzentrierung 103 kann bei der Montage entlang des Messseils 102 wie ein Kolben innerhalb der Zentrierhülse 104 verschoben werden. Nach Platzierung der Seilzentrierung 103 an der gewünschten Position, die möglichst nahe bei der Elektronikeinrichtung 101 an einem Ende der Zentrierhülse 104 liegt, wird die Seilzentrierung 103 am Messseil 102 fixiert, um eine vorgebbare Position des Messseils einzuhalten.

Der Innenraum der Zentrierhülse 104 kann der Umgebung der Seilführung 105 zugeordnet werden. Dieser Innenraum bildet einen Hohlraum. Auch wenn der Innenraum der Zentrierhülse 104 in Fig. 1 leer und als Hohlraum dargestellt ist, kann das Sondengewicht 120, welches die Zentrierhülse 104, die Seilführung 105 und die Seilzentrierung 103 aufweist, auch als massiver Körper ausgebildet sein. Die Seilzentrierung 103 hält das Messseil 102 in der Mitte der Sondenvorrichtung 120 und erschwert dadurch den Kontakt des Messseils 102 mit der Zentrierhülse 104. Durch diese Ausrichtung kann ein Einbau der Sondenendvorrichtung 120 in ein Standrohr erleichtert werden. Eine Berührung des Messseils 102 mit dem Standrohr kann verhindert werden.

Die Sondenendvorrichtung 120 ist rotationssymmetrisch oder koaxial um das Messseil 102 angeordnet. Ein Ungleichgewicht, welches durch den abgeknickten Seilendabschnitt 102''' hervorgerufen wird, wird ausgeglichen. Das Messseil 102 und insbesondere eine Longitudinalachse des Messseils bildet eine Symmetrieachse für die Zentrierhülse 104 und/oder die Seilzentrierung 103 sowie für die äußere Form der Seilführung 105. Durch die rotationssymmetrische Ausbildung lässt sich eine gleichmäßige Gewichtsverteilung um einen Schwerpunkt des Messseils 102 herum erreichen. Die Sondenendvorrichtung 120 oder Sondenvorrichtung 120 weist im Wesentlichen eine Länge s auf, die von der Dicke d der Seilführung 105 und der Länge der Zentrierhülse 104 gebildet wird. Die gesamte Länge der Sondenendvorrichtung 120 kann im Falle eines Überragens der dachförmigen Seilzentrierung 103, wie in Fig. 1 dargestellt, etwas länger als die Länge s ausfallen, wobei diese Länge im Wesentlichen keinen Einfluss auf die elektrischen Eigenschaften des Straffgewichts 120 hat, die für die Reflexion einer elektromagnetischen Welle an einer Grenzfläche im Bereich des zweiten Messseilabschnitts 102" verantwortlich sind.

Die Zentrierhülse 104, welche aus Metall oder Kunststoff beschaffen sein kann, also entweder aus dem gleichen oder aus einem anderen Material wie die Seilführung 105, dient einerseits der Erhöhung der Masse des Sondengewichts 120 und andererseits zur Zentrierung des Messseils 102, falls die Seilsonde 102, 120 in ein Standrohr oder in einen Bypass eingebaut wird. In einem anderen Ausführungsbeispiel kann die Seilführung 105 und Zentrierhülse 104 einstückig aus Kunststoff oder Metall gefertigt sein.

Die Seilführung 105 und/oder die Zentrierhülse 104 ist/sind zwar teilweise durchbrochen, um Füllgut an den mittleren Messseilabschnitt 102" gelangen zu lassen. Die Seilführung 105 verhindert jedoch den Kontakt des Messseils 102 mit der Zentrierhülse 104, indem sie das Messeilende 102''' gegenüber dem Füllgut isoliert. In einem Beispiel kann zwar auch Füllgut an das Messseil 102 gelangen, jedoch erfolgt mittels der Seilführung 105 eine Beabstandung des Messeilendes 102''' gegenüber einer Bezugsfläche, wie beispielsweise einer Begrenzungsfläche 105', 105", 105''' der Seilführung 105.

Die Seilführung 105 sorgt für die Form eines Verlaufs des Endabschnitts 102''' des Messseils im Inneren der Seilführung 105 und ermöglicht eine Abweichung des Verlaufes des Seils von einer durch die Schwerkraft vorgegebenen Richtung der Wirkung auf das Messseil 102 in Richtung der Längsachse des Messseils 102. Durch diese Abweichung, deren Form durch die Ausprägung des Hohlraums 121 im Inneren des Sondenkörpers 105 vorgebbar ist, kann zumindest ein Knick 129 in das Messseil 102 eingebracht werden, der dafür sorgen kann, dass die Gesamtlänge des Messseils 102 über die Sondenlänge 1 hinausreichen kann. Die Sondenlänge 1 reicht von der Einkoppeleinrichtung 127, mit der das Messseil 102 an der Elektronikeinrichtung 101 befestigt werden kann, bis zu der unteren Oberfläche 105" des Sondenkörpers 105. Die Seilfixierung 106 ist an einem äußeren oder entfernten Ende des Messseils 102 im Bereich des dritten Seilabschnitts 102''' angeordnet und kann der Sicherung des Messseils im Inneren des Sondenkörpers 105 dienen. Die Seilfixierung 106 oder Befestigungseinrichtung 106 kann zusätzlich zu einer von der Aufnahmeöffnung 122 und/oder von dem Hohlkörper 121 auf das Messseil 102 wirkenden Presskraft als Sicherung vor einem Herausrutschen des Seils aus dem Sondenkörper 105 dienen.

Der Knick 129 ist so ausgestaltet, dass er von einer elektromagnetischen Welle möglichst reflexionsfrei passiert werden kann. Durch den Knick 129 ist das Volumen des Hohlraums 121 größer als das Volumen, das in Longitudinalrichtung entlang dem Messseil von der Aufnahmeöffnung 122 bis zur unteren Fläche 105" oder bis zur Begrenzung 105" des Sondenendkörpers 105 reichen würde, wenn das Messseil 102 entlang der Schwerkraft oder entlang der Longitudinalrichtung über die gesamte Dicke d des Sondenendkörpers senkrecht in den Sondenendkörper 105 eingesteckt wäre. Die Begrenzung 105" oder die untere Fläche 105" des Sondenendkörpers bildet eine Grundlinie 128 oder Bezugslinie 128, von der aus die Dicke des Sondenkörpers d, die Länge s des Sondengewichts 120 und die Länge 1 der Seilsonde gemessen wird. In einem Beispiel ist durch den Knick 129 die Gesamtlänge des Messseils 102 länger als die Sondenlänge 1, wodurch eine künstliche Verlängerung der Sondenlänge 1 erreicht werden kann.

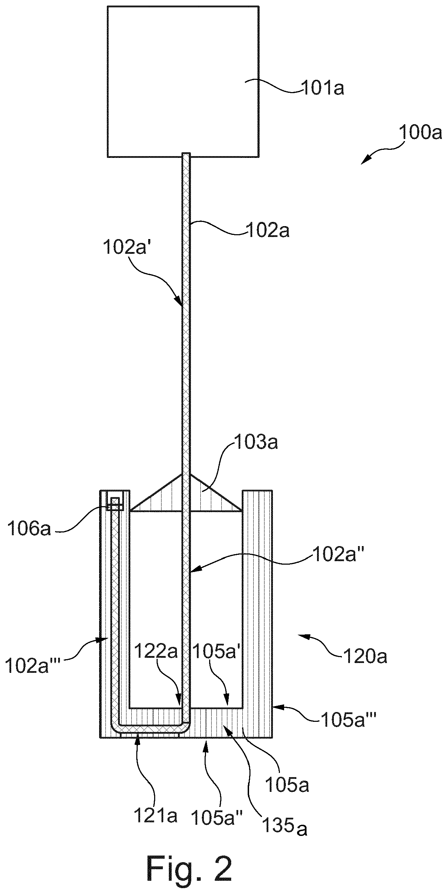

Fig. 2 zeigt eine Schnittdarstellung eines U-förmigen Sondenendkörpers 105a oder eines tonnenförmigen Sondenendkörper 105a. Der Aufbau des Feldgeräts 100a entspricht im Wesentlichen dem Aufbau des Feldgeräts 100 aus Fig. 1. Während Fig. 1 einen scheibenförmigen Sondenendkörper 105 zeigt, zeigt Fig. 2 einen tonnenförmigen Sondenendkörper 105a, der mit U-förmigen Querschnitt ausgebildet ist. In anderen Worten bedeutet das, dass der Sondenendkörper 105a nicht, wie in Fig. 1 gezeigt, eine aus separatem Material oder eine als separates Teil gefertigte Zentrierhülse 104 aufweist, sondern dass die Zentrierhülse ein Teil des Sondenendkörpers 105a ist. Somit kann auch der dritte Seilabschnitt 102a''' U-förmig ausgebildet sein, und ausgehend von der Aufnahmeöffnung 122a der Wandung des Sondenendkörpers 105a folgen. Das Sondengewicht 120a oder die Sondenendvorrichtung 120a weist im Wesentlichen den Sondenendkörper 105a und die Seilzentrierung 103a auf. Das Innere des Sondengewichts 120a ist leer oder hohl, sodass ein Füllgut, welches über die Oberfläche 105a' hinaus ragt, durch Öffnungen in dem tonnenförmigen Sondenkörper 105a an den zweiten Seilabschnitt 102a" des Messseils 102a gelangen kann, um ein Nutzecho oder Füllstandecho in diesem zweiten Seilabschnitt zu erzeugen. Zwischen dem Sondengewicht 102a, welches die Seilzentrierung 103a aufweist und der Elektronikeinrichtung 101a liegt der erste Seilabschnitt 102a'.Die Seilzentrierung 103a ist ebenso wie in Fig. 1 dargestellt mit dreieckigem Querschnitt reflektionsarm ausgebildet.

Die Befestigungseinrichtung 106a ist in einer Seitenwand des tonnenförmigen Sondenkörpers 105a ausgebildet. Der dritte Seilabschnitt 102a''' wird in dem Hohlraum 121a geführt, der U-förmig ausgebildet ist, wodurch sich die U-Form des Endabschnitts des Messseils 102a ergibt. Da das Äußere des Sondenkörpers 105a oder des Sondenendkörpers 105a rotationssymmetrisch ausgebildet ist, könnte bei entsprechender Formung des Hohlraums 121a im Inneren des Sondenendkörpers 105a, das Seilende 102a''' noch in anderen Bereichen des Sondenkörpers 105a verlaufen, um den Abstand zwischen Aufnahmeöffnung 122a und Seilende im Bereich der Befestigungseinrichtung 106a zu erhöhen. Es sei angemerkt, dass während der Sondenendkörper 105a äußerlich rotationssymmetrisch ausgebildet ist, der Hohlraum im Inneren des Sondenkörpers 105a nicht rotationssysmmetrisch angeordnet ist. Durch die Führung in der Seitenwand erfolgt eine Verlängerung des Abstands zwischen der Aufnahmeöffnung 122a und dem Seilende 106a gegenüber einem ungeknickten Verlauf. Diese Verlängerung kann die Unterscheidbarkeit eines durch das Seilende hervorgerufenen Störechos von einem Nutzecho, welches von einem Füllstand im Bereich des zweiten Seilabschnitts 102a" hervorgerufen wird, erhöhen, ohne den Abstand von einer unteren Fläche 105a" des Sondenkörpers 105a gegenüber einer in Fig. 2 nicht dargestellten Bodenfläche eines Behälters zu vergrößern. Somit wird ein Totbereich im Wesentlichen durch die Dicke d des Sondenendkörpers 105a bestimmt, d. h. von dem Abstand zwischen oberer Oberfläche 105a' und unterer Oberfläche 105a". Der Sondenendkörper 105a ist vollständig aus Kunststoff gefertigt, sodass auf metallische Teile einer Zentrierhülse 104, wie in Fig. 1 dargestellt, verzichtet werden kann. Da keine metallischen Teile in der Wandung des Sondenkörpers 105a genutzt werden, kann der Außendurchmesser des Straffgewichts 120a, der im Wesentlichen durch die zu dem zweiten Seilabschnitt 102a" parallel verlaufenden Zylinderflächen des Sondenkörpers 105a bestimmt wird, reduziert werden, da die Gefahr eines Kontakts des Messseils 102a, welches die elektromagnetische Welle führt, und einem anderen metallischen Teil reduziert ist. Wegen des geringen Außendurchmessers lassen sich kleine Straffgewichte 120a realisieren. Die Wandung 135a kann auch für eine Beabstandung des Messeilendes 102a''' von der seitlichen Mantelfläche 105a''' sorgen, die parallel zu einer Längsachse der Sondenendvorrichtung 120a verläuft.

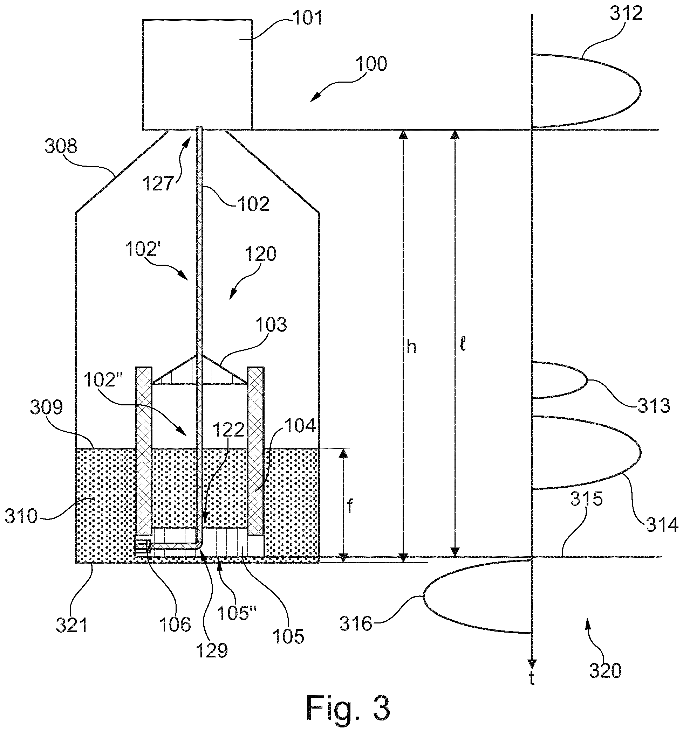

Die Fig. 3 zeigt eine Schnittdarstellung des Feldgeräts 100 aus Fig. 1 in einem Behälter 308 zusammen mit einer Echokurve 320 gemäß einem exemplarischen Ausführungsbeispiel der vorliegenden Erfindung. Das Sondengewicht 120 ist im Inneren des Behälters 308 angeordnet und taucht in das Füllgut 310 ein, welches sich in dem Behälter 308 im Bereich einer Bodenfläche 321 des Behälters 308 befindet. Durch das Eintauchen und da die Zentrierhülse 104 und/oder der Sondenendkörper 105 Öffnungen aufweist, gelangt das Füllgut 310 in die Umgebung des Sondenendkörpers 105 und an das Messseil 102 im Bereich des zweiten Seilabschnitts 102". Es bildet sich zwischen zwei unterschiedlichen Materialien im Inneren des Behälters 308 eine Grenzschicht 309 oder eine Füllhöhe 309 aus. In Fig. 2 sind die beiden unterschiedlichen Materialien das Füllgut 310 und die Atmosphäre aus Luft. Die Grenzschicht 309 führt zu einer Reflexion der entlang des Messseils 102 wandernden elektromagnetischen Welle, welche sich ausgehend von der Elektronikeinrichtung 101 in Richtung des Behälterbodens 321 ausbreitet. Es ist der Fig. 1 zu entnehmen, dass die Behälterhöhe h, die von dem Behälterboden 321 bis in den Bereich einer Behälteröffnung und in den Bereich einer Einkoppeleinrichtung 127 reicht, an der die Elektronikeinrichtung 101 mit dem Messseil 102 verbunden ist, unwesentlich größer ist, als die Sondenlänge 1, welche von der Einkoppeleinrichtung 127 bis zur Begrenzungsfläche 105" reicht.

Neben dem Messgerät 100 ist eine Echokurve 320 dargestellt, um markante Punkte der Echokurve in eine Beziehung zu ihren physikalischen Ursachen in der Messanordnung zu verdeutlichen. Die Zeitachse entspricht einer Entfernung der wandernden elektromagnetischen Welle entlang des Messseils 102, d.h. die Zeit t kann in eine physikalische Distanz umgerechnet werden und umgekehrt. Das Feldgerät 100, Messgerät 100, die Messvorrichtung 100 oder der Sensor 100 ist in dem Behälter 308 eingebaut, sodass sich das Messseil 102 und das Messgewicht 120 im Inneren des Behälters 308 befinden und so dass die Elektronikeinrichtung 101 im Äußeren des Behälters 108 angeordnet ist. Zur Befestigung der Elektronikeinrichtung 101 an der Behälteröffnung kann ein Einbauflansch genutzt werden, der in Fig. 3 nicht dargestellt ist. Das Füllgut 310 ist im Allgemeinen nicht elektrisch leitfähig, wodurch es zu starken Reflexionen kommt, falls eine elektromagnetische Welle versucht, in das Füllgut 310 einzudringen.

Die Sensorelektronik 101 oder Elektronikeinrichtung 101 sendet einen elektromagnetischen Impuls 312 in Richtung des Füllguts 310. Dieser elektromagnetische Impuls weist in Abhängigkeit von der Laufzeit und der Impulsdauer eine gewisse Impulsbreite auf, die zu einer Impulsform entlang einer Zeitachse t führt. Aufgrund der Impulsbreite kann es zu Überschneidungen von Echos kommen. Die Impulsbreite ist auch dafür verantwortlich, dass Echos, die von diesem Impuls hervorgerufen werden, eine gewisse Impulsbreite aufweisen. Die Amplitude der Reflexionen ist von der Charakteristik einer Störstelle abhängig, insbesondere von den Reflexionseigenschaften der Störstelle.

Der elektromagnetische Impuls 312 breitet sich in Richtung des Füllguts 310 aus und trifft nach dem Durchlaufen des ersten Teilabschnitts 102' auf die reflektionsarme Seilzentrierung 103. Bei dem in Fig. 3 dargestellten Füllstand des Füllguts 310, der sich im Bereich des zweiten Seilabschnitts 102", im Inneren des Sondengewichts 120 befindet, ist der erste Seilabschnitt 102' vollständig frei von Füllgut, was zu einer im Wesentlichen ungestörten Ausbreitung des Sendeimpulses bis zu der Seilzentrierung 103 führt. Durch die optimierte Form und Werkstoffwahl, d. h. die reflektionsarme Form und das reflektionsarme Material, verursacht die Seilzentrierung 103 nur ein sehr geringes Störecho, wie an der geringen Amplitude des Echos 313 zu erkennen ist. Der Einfluss eines Echos zeigt sich an dem Verhältnis der Amplitude des Störechos 313 zu der Amplitude des Ausgesendeten Impulses 312. Die geringe Amplitude des Störechos 313 bezieht sich auf die Amplitude des Sendeimpulses 312. Die Amplitude wird in der Echokurve 320 senkrecht zu der Zeitachse t im Vergleich zum ausgesendeten Impuls 312 dargestellt.

Nach dem Durchlaufen der Seilzentrierung 103 gelangt der sich in Richtung Füllgut 310 ausbreitende Impuls im zweiten Seilbereich 102" auf die Grenzschicht 309 oder die Füllgutoberfläche 309. Da das Füllgut 309 aus im Wesentlichen nicht leitendem Material beschaffen ist, beispielsweise handelt es sich bei dem Füllgut um Öl, entsteht im Bereich der Füllhöhe f, welche sich zwischen Behälterboden 321 und Füllgutoberfläche 309 erstreckt, ein deutlich erkennbares Füllstandecho 314. Aufgrund der stärkeren Reflexion im Vergleich zu den von der Seilzentrierung 103 hervorgerufenen Reflexionen ist die Amplitude des Füllstandechos 314 wesentlich größer als die Amplitude des durch die Seilzentrierung 103 hervorgerufenen Störechos 313. Somit kann das Füllstandecho 314 gut von dem geringen Störecho 313 unterschieden werden, welches von der Seilzentrierung 103 hervorgerufen wird, und der Füllstand kann mit einer hohen Genauigkeit ermittelt werden.

Ein weiteres Störecho 316, welches Einfluss auf die Erkennbarkeit des Füllstandechos, d. h. des Nutzechos 314 haben könnte, ist das von dem Seilende im Bereich der Befestigungseinrichtung 106 des Messseils 102 hervorgerufene Endeecho 316. Dieses entsteht an dem entfernten Ende des Messseils 102 in Ausbreitungsrichtung der elektromagnetischen Welle, also dort, wo das Messseil physikalisch endet und in ein anderes Material übergeht. Dieses Echo ist als Seilendeecho 316 erkennbar, da die Amplitude in umgekehrter Richtung wie das Störecho 313 und das Nutzecho 314 verläuft. Die Lage ist von dem Abstand zwischen der Aufnahmeöffnung 122 und dem Seilende im Bereich der Befestigung 106 abhängig. Würde das Seilende lediglich bis zu der unteren Oberfläche oder Begrenzung 105" reichen, würde das Störecho 316 entlang der Zeitachse t in Richtung des Nutzechos 314 geschoben und würde bei einer geringen Füllstandhöhe f zu einer Überlagerung des Störechos 316 mit dem Nutzecho 314 führen. Diese Überlagerung bei geringem Füllstand würde in einem bestimmten Bereich des Füllstands f zu einem Totbereich führen. Der Totbereich ist ein Bereich, in dem unbrauchbare Messergebnisse erzeugt werden, und der von dem Abstand zwischen Messseilende und Füllstand f bestimmt wird.

In anderen Worten bedeutet das, dass nachdem der Impuls 312 auf die Grenzfläche 309 aufgetroffen ist, der Impuls weiter durch das elektrisch nicht leitfähige Füllgut 310, beispielsweise Öl, entlang dem Messseil 102 bis zum Ende des Messseils 102 im Bereich der Befestigungseinrichtung 106 läuft und das Endeecho 316 als ein weiteres Störecho 316 erzeugt. Aufgrund des Knickes 129 konnte jedoch das Seilende verlängert werden, ohne an dem Behälterboden 321 anzustoßen und ohne die Behälterhöhe h zu verlängern. Bedingt durch die Verlängerung des Messseils 102 gegenüber der Sondenlänge 315, 1 entsteht das Störecho 316 in einem Bereich, welcher sich örtlich weit hinter der Sondenlänge 315, 1 und/oder der Behälterhöhe h befindet. Diese örtliche Distanz, kann auch auf die Zeitachse der Echokurve 320 gemappt oder projiziert werden. Durch die Verlängerung kommt es zu einem Auseinanderziehen der physikalischen Distanz des Störechos 316 und Nutzechos 314 und die Auswirkung des Störechos 316 auf das Füllstandecho 314 kann reduziert oder vermieden werden. So kann das Füllstandecho 314 mit einer hohen Messgenauigkeit zur Bestimmung des Füllstandes 314 ermittelt werden. Folglich kann bei Verwendung der erfindungsgemäßen Sondenendevorrichtung 120 auch ein Füllstand 309, f ermittelt werden, welcher sich nahe dem Bereich der Bodenfläche 321 befindet.

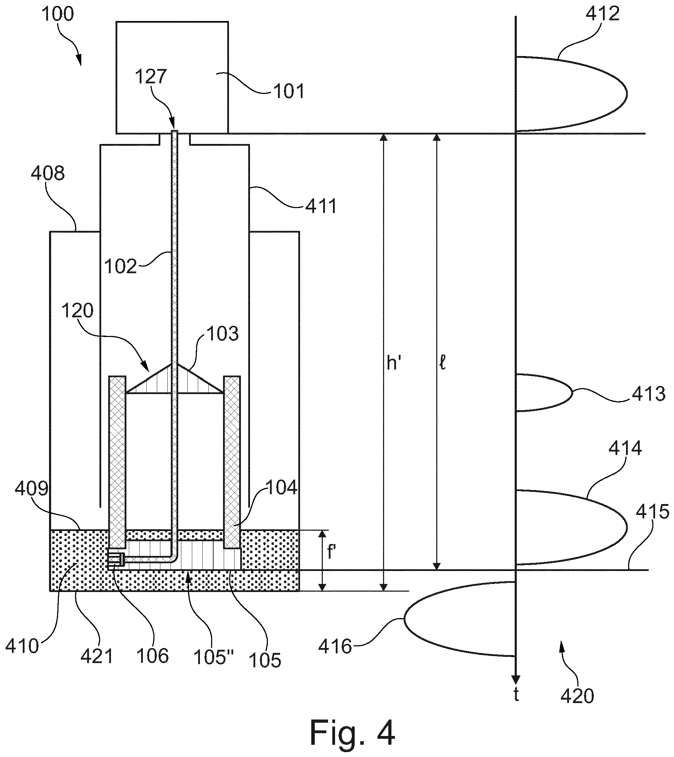

Fig. 4 zeigt eine Querschnittsdarstellung eines Messaufbaus mit einem Feldgerät 100 aus Fig. 1 und einem Standrohr 411 gemäß einem exemplarischen Ausführungsbeispiel der vorliegenden Erfindung. Gemäß Fig. 4 ist die Messonde des Feldgeräts 100 in einen Behälter 408 mit einem Standrohr 411 eingelassen. Da die gleich Sonde 102, 120 wie aus Fig. 1 und Fig. 3 zum Einsatz kommt entspricht die Gesamtlänge der Sonde 1 auch der Sondenlänge 1 aus Fig. 1 und Fig. 3. Die Behälterhöhe h' ergibt sich aus der Höhe des Behälters 408 und einem Anteil der Länge des Standrohrs 411. Die Höhe h' ist auf den Behälterboden 421 bezogen. Die Füllstandhöhe 409 des Füllguts 410 wird ebenfalls auf den Behälterboden 421 bezogen und als f' bezeichnet. Die Sondenlänge 1 bzw. das Sondenende 415 wird von der unteren Oberfläche 105" des Gewichtkörpers 120 bestimmt und reicht bis zu der Einkoppeleinrichtung 127, an der die Elektronikeinrichtung 101 mit dem Messseil 102 verbunden wird.

Neben der Messanordnung ist die zugehörige Echokurve 420 dargestellt. Die Elektronikeinrichtung 101 erzeugt den elektromagnetischen Impuls 412. Die Seilsonde 102, 120 mit dem Messseil 102 und dem Sondengewicht 120 ist innerhalb des Standrohrs 411 montiert, sodass die Zentrierhülse 104 und die zylinderförmige Wandung des Standrohrs 411 koaxial zu dem Messseil 102 verlaufen. Die Zentrierhülse 104 sorgt in Kombination mit der Seilzentrierung 103 dafür, dass das Messseil 102 über seinen gesamten Verlauf im Inneren des Standrohres 411 von der Wandung des Standrohres 411 ferngehalten oder beabstandet wird. Das Standrohr 411 ist in Richtung des Bodens 421 offen, so dass das Sondengewicht 120 in Richtung des Behälterbodens 421 aus dem Standrohr 411 austreten kann. Das Sondengewicht 120 befindet sich zu einem Großteil in dem Standrohr 411.

In den Behälter 408 ist das elektrisch nicht leitfähige Füllgut 410 gefüllt, dessen Füllstand 409 ermittelt werden soll. Die Zentrierhülse 104 gewährleistet, dass das Messseil 102 im Wesentlichen mittig, d. h. entlang einer Longitudinalachse, welche von dem Messseil 102 vorgegeben ist, innerhalb des Standrohres 411 positioniert ist. Die Zentrierhülse 104 verhindert durch die mittige Zentrierung und/oder durch das Halten des Messseils in einer vorgebbaren Position, dass es zu einem Kurzschluss zwischen dem Messseil 102 und dem Standrohr 411 kommen kann. Zusätzlich gewährleistet die Zentrierhülse 104 bei dem Standrohr 411, welches von dem Behälterboden 421 beabstandet ist, dass eine Messung des Füllguts 410 auch noch in dem Zwischenraum zwischen dem Standrohrende und dem Sondenende 415 erfolgen kann.

Bei einer Messung wird der elektromagnetische Impuls 412 entlang des Messseils 102 in Richtung des Sondenendes 105", 415 geschickt. Dieser Sendeimpuls 412 ist in der Echokurve 420 dargestellt. Die Seilzentrierung 103 erzeugt ein geringes Störecho 413. Der Übergang zwischen den unterschiedlichen Materialien im Behälterinneren und dem Füllgut 410 an der Grenzschicht 409 sorgt für das Füllstandecho 414. Dieses Füllstandecho 414 ist nahe dem Bereich des Sondenendes 105", 415 ausgeprägt. Würde das Messseil lediglich bis zu der Begrenzung 105" reichen, d. h. bis zu dem physikalischen Sondenende 415, würde sich das negative Sondenecho 416 im Bereich des Sondenechos 415 ausbilden und sich mit dem Nutzecho 414 überlagern. Durch die künstliche Verlängerung mittels des L-förmigen Knicks des Messseils 102 gelingt es jedoch, das Störecho 416 in einen Bereich der Zeitachse t der Echokurve 420 zu verlagern, welcher entsprechend einer weiter fortgeschrittenen Zeit t gegenüber dem Sondenende 415 entspricht, wodurch es zu keiner Überlagerung oder nur zu einer geringen Überlagerung des Nutzechos 414 und des Störechos 416 kommt. Durch den Knick werden das Nutzecho 414 und das Störecho 416 weit beabstandet.

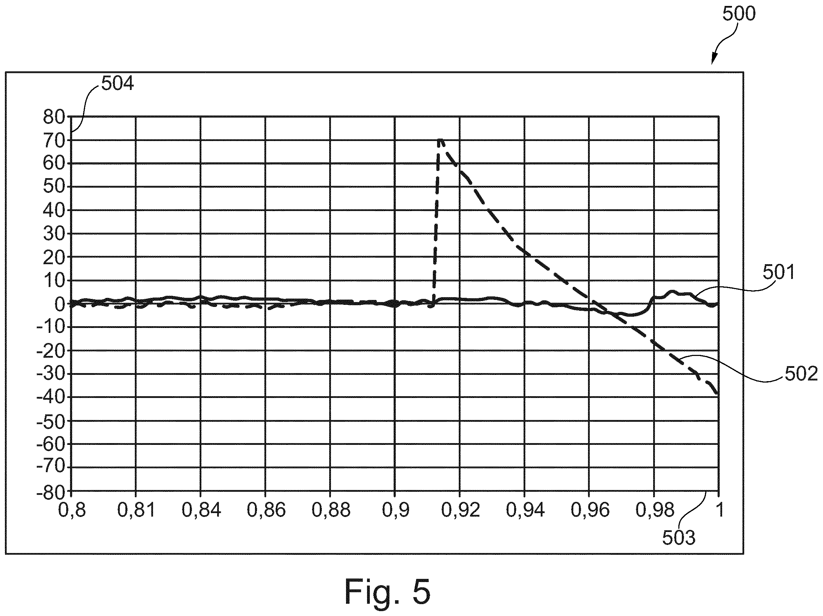

Fig. 5 zeigt eine Qualitätsmesskurve für eine Seilsonde gemäß einem exemplarischen Ausführungsbeispiel der vorliegenden Erfindung.

In dem Messdiagramm 500 sind zwei Messkurven 501, 502 angegeben. Die Messkurven 501, 502 stellen die Abweichung eines Amplitudenwerts einer Echokurve von einem Sollwert in Millimeter entlang einer gemessenen Distanz dar. An der Abszisse 503 sind die Distanzwerte in Meter von 0,8 m bis 1 m dargestellt. Diese Distanzwerte können in Zeitwerte t der Echokurve umgerechnet werden. An der Ordinate 504 sind die Abweichungen von einem Sollwert in Millimeter dargestellt. Das Diagramm 500 stellt die Messfehler bei einer Messung in dem Füllgut Öl dar, insbesondere in Mineralöl, also in einem mit Öl gefülltem Behälter und vergleicht die Abweichung von einem Sollwert mit den von Messsonden mit einem massiven Straffgewicht. Die Sondenlänge der beiden Sonden, deren Eigenschaften verglichen werden, beträgt 1 = 1 m.

Die Kurve 501 gehört zu einer Messung, welche mit der erfindungsgemäßen Seilsonde gemäß Fig. 1 aufgenommen ist. Die Messkurve 502 gehört zu einer Seilsonde mit einem massiven Sondengewicht und unverlängerter Messseillänge. Der an der Abszisse 503 angetragene Distanzwert bestimmt den Abstand der Grenzfläche 309, 409 von der Einkoppeleinrichtung 127.

Das Straffgewicht 120 mit dem erfindungsgemäßen Aufbau dient zur Straffhaltung des Messseils 102, ohne relevante Störechos durch das Straffgewicht zu erzeugen. Dieses Straffgewicht 120 für eine Seilsonde erzeugt in einem Bereich nahe dem Behälterboden oder weit entfernt von der Einkoppeleinrichtung nur geringe Störechos. Durch die geringen Störechos kann es ermöglicht werden, Füllgüter mit einem Low-DK-Wert im Bereich des Sondengewichts ohne Blockdistanz mit hoher Genauigkeit zu messen. Bei Füllgütern mit einem Low-DK Wert, also mit einem geringen DK-Wert, handelt es sich um Füllgüter, die aus einem Material mit einer niedrigen Dielektrizitätskonstanten, ε, oder Permittivität beschaffen sind. Bei Öl, insbesondere bei Mineralöl, handelt es sich um ein elektrisch schlecht leitendes Material, das starke Reflexionen erzeugt.

Seilsonden mit massiv aufgebauten Straffgewichten oder mit massiv aufgebauten Zentriergewichten können eine Blockdistanz von größer als 100 mm aufweisen. Das bedeutet, dass eine Messung des Behälterniveaus im Bereich kleiner 100 mm mit solch einer Seilsonde nicht möglich ist. In anderen Worten mag dies bedeuten, dass mit einer Seilsonde mit massivem Sondengewicht und/oder mit unverlängertem Messeil 102 eine Füllstandhöhe f, f erst ab 100 mm bestimmt werden kann, da sich erst ab einer Länge von 100 mm zwischen Füllstand und Seilende 106 das Endeeocho von dem Füllstandecho unterscheiden lässt.. Der erfindungsgemäße Sondenendkörper 105, 105a, der zur isolierten Verlängerung eines Messseilendabschnitts genutzt werden kann, erlaubt eine Blockdistanz von kleiner 100mm. Bei der erfindungsgemäßen Sondenendvorrichtung ist eine Unterscheidung zwischen Straffgewicht und Zentriergewicht nicht mehr erforderlich. Durch die Reduzierung der Blockdistanz kann das Behältervolumen gut von der Sonde ausgenutzt werden, indem das Sondenende 105", 105a" nahe an den Behälterboden gebracht wird.

Die Messkurve 502 entspricht einer Messsonde, die eine Sondenlänge 1 von einem Meter (1 = 1000mm) aufweist, mit massivem Straffgewicht, jedoch ohne Messseilverlängerung. Es ist zu erkennen, dass die Abszisse 503 die Distanz der Messkurve von einer Einkopplung 127 angibt. Das mag bedeuten, dass ein Behälterboden 321, 421 bei dem Distanzwert 1 m am rechten Rand des Diagramms 500 angeordnet ist. Folglich wird der Füllstand 309, 409 ausgehend von dieser Bezugslinie betrachtet. Bei einem Distanzwert von 910 mm oder 0,91 m ist eine Füllhöhe von etwa 90 mm erreicht. Erst ab diesem Distanzwert zeigt die Kurve 502 in Richtung gering werdender Distanzwerte zu der Einkoppeleinrichtung einen geradlinigen Verlauf mit einem geringen Messfehler um 0mm auf. Das bedeutet in anderen Worten, dass in Bereichen von 910 mm bis 1000 mm, d. h. bei Füllhöhen von 0 bis 90 mm mit der zu der Kurve 502 gehörenden Messsonde keine fehlerfreie Messung möglich ist. Dagegen weist die mit der erfindungsgemäßen Messsonde gemäß Fig. 1 in dem Füllgut Mineralöl aufgenommene Messkurve 501 einen geradlinigen und somit im Wesentlichen fehlerfreien Verlauf bis zu einem Distanzwert von etwa 990 mm auf. Aus diesem Grund mag mit der zu der Kurve 501 gehörenden Messsonde gemäß Fig. 1 eine gute Bestimmung einer Füllhöhe ab einer Füllhöhe f, f' von 10 mm möglich sein.

Fig. 5 zeigt mit Kurve 502 den Messfehler einer 1 m langen Seilsonde, eingebaut in einem Öltank. Verglichen wurde das Standardzentriergewicht mit einem erfindungsgemäß aufgebauten Sondengewicht gemäß Fig. 1.

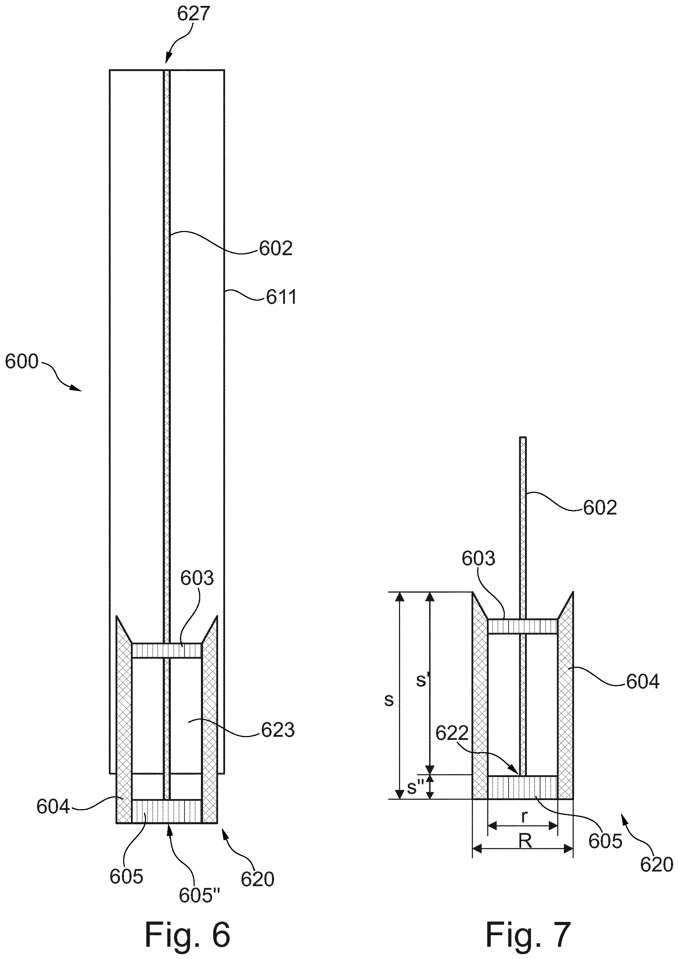

Fig. 6 zeigt eine Querschnittsdarstellung einer weiteren Seilsonde 600 gemäß einem exemplarischen Ausführungsbeispiel der vorliegenden Erfindung. In Fig. 6 ist die Elektronikeinrichtung, die sich an der Einkoppeleinrichtung 627 anschließen lässt, nicht dargestellt. Fig. 6 zeigt lediglich das Messseil 602 und das Sondengewicht 620. Das Sondengewicht 620 und das Messseil 602 verlaufen teilweise in dem nach unten offenen Standrohr 611. Das Sondengewicht 620 weist die Seilführung 605, die Seilzentrierung 603 und die Zentrierhülse 604 auf. Nicht zu sehen ist in Fig. 6 der im Inneren der Seilführung 605 verlängerte Verlauf des Seilendabschnitts des Messseils 602. Sowohl die Seilführung 605 als auch die Seilzentrierung 603 sind scheibenförmig ausgebildet. Die Zentrierhülse 604 ist als beidseitig offener Zylinder ausgebildet, der von der scheibenförmigen Seilzentrierung 603 und der scheibenförmigen Seilführung 605 begrenzt wird. Sowohl die Seilführung 605 als auch die Seilzentrierung 603 und die Zentrierhülse 604 weisen Öffnungen auf, sodass Füllgut in das Innere des Seilgewichts 620 eindringen kann. Durch das Eindringen des Füllguts kann mit dem Messseil 602 oberhalb der Seilführung 605 ein Füllstand bestimmt werden kann.

Während das von der Einkoppeleinrichtung 627 wegweisende ringförmige Ende der Zentrierhülse 604 plan mit der Begrenzung 605" der Seilführung 605 abschließt, ist die der Einkoppeleinrichtung 627 zugewandte Öffnung trichterförmig bis zu der Seilzentrierung 603 ausgebildet. Die Seilzentrierung 603 ist als Kunststoffsteg zum Zentrieren des Messseils 602 ausgebildet. Die Seilführung 605 ist ebenfalls als Kunststoffsteg zur Seilzentrierung und Seilbefestigung ausgebildet. Die Ausbildung als Kunststoffsteg sorgt dafür, dass der in Fig. 6 nicht dargestellte verlängerte Endabschnitt des Messseils 602 zwar mittels der Seilführung 605 von dem umgebenden Füllgut oder der umgebenden Umgebung isoliert wird, jedoch das Füllgut in das Innere 623 des Straffgewichtes 620 eindringen kann.

Fig. 7 zeigt einen Detailausschnitt des Straffgewichts 620 aus Fig. 6 gemäß einem exemplarischen Ausführungsbeispiel der vorliegenden Erfindung. Das Messseil 602 ist aus Drahtgeflecht hergestellt und weist einen im Wesentlichen über die gesamte Länge konstanten kreisförmigen Durchmesser von 1,5 mm auf. Entsprechend ist auch die Seildurchführung in dem Kunststoffsteg 603 oder in der Seilzentrierung 603 mit einem entsprechenden Durchmesser ausgebildet. Ebenso weist die Aufnahmeöffnung 622 einen kreisförmigen Durchmesser mit 1,5 mm auf. Die Breite r des Sondenkörpers 605 beträgt 25 mm und die Gesamtbreite R des Straffgewichts 620 einschließlich Zentrierhülse 604 beträgt 35 mm. Die Gesamtlänge s des Straffgewichts 620 beträgt 72 mm und die Dicke s", d des Sondenkörpers 605 beträgt 8 mm. Somit beträgt die Länge der der Einkoppeleinrichtung 627 zugewandten Öffnung der Zentrierhülse 604 bis zu der Aufnahmeöffnung 622, s' = 64mm.

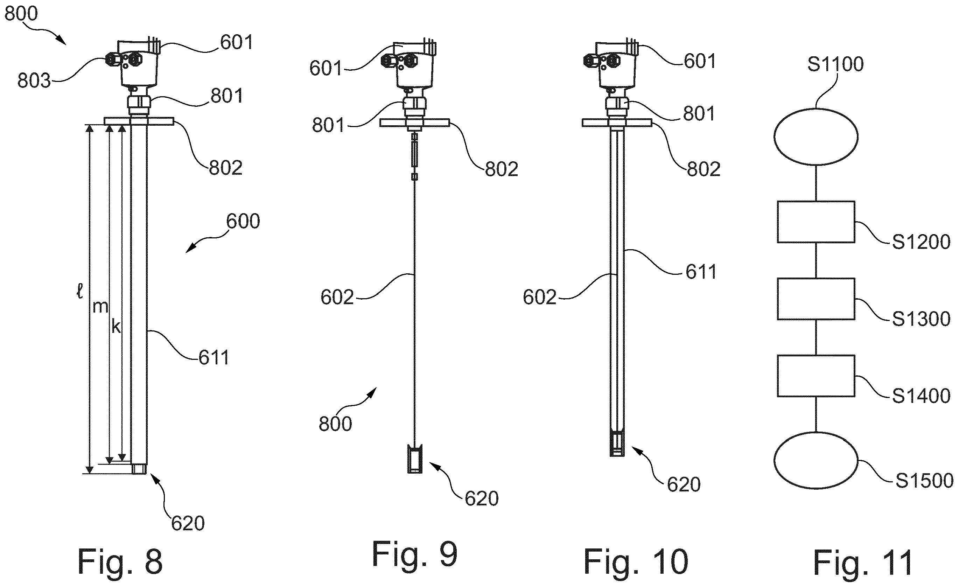

Fig. 8 zeigt ein Feldgerät 800 mit der Elektronikeinrichtung 601, der Einkoppeleinrichtung 801, einem Befestigungsflansch 802, dem Standrohr 611 und dem Straffgewicht 620, welches an einem der Einkoppeleinrichtung 801 gegenüberliegenden Ende des Standrohres 611 aus dem Standrohr austritt. Das Messeil 602 wird in Fig 8 von dem Standrohr 611 verdeckt. Die Gesamtsondenlänge der Seilsonde 600 beträgt von der Einkoppeleinrichtung 801, welche sich in den Flansch 802 bis zur unteren Oberfläche des Flansches 802 erstreckt, 1 = 1000 mm. Die Länge m des Standrohres beträgt 980 mm, sodass das Straffgewicht 620 20 mm aus dem Standrohr 611 herausragt. Die Gesamtlänge bis zu der in Fig. 8 von dem Standrohr 611 verdeckten Oberkante des Straffgewichts 620 beträgt k = 970 mm.

Fig. 8 zeigt auch die Elektronikeinrichtung 601 eines Zweileitergeräts. Die Elektronikeinrichtung 601 weist zumindest einen Elektronikanschluss 803 auf, an den eine Zweidrahtleitung angebracht werden kann. Diese Zweidrahtleitung kann sowohl zur Energieversorgung als auch zur Datenübertragung der Elektronikeinrichtung 601 genutzt werden. In einem Beispiel wird über die Zweidrahtleitung ein 4...20 mA Signal übertragen, in einem anderen Beispiel wird über die Zweidrahtleitung ein HART-Signal übertragen.

Fig. 9 zeigt eine Seitenansicht des Feldgeräts 800 aus Fig. 8. In der Figur ist die Elektronikeinrichtung 601, die Einkoppeleinrichtung 801, der Flansch 802, das Messseil 602 und das Straffgewicht 620 dargestllt. Durch die von dem Sondengewicht 620 hervorgerufene Schwerkraft wird das Messseil 620 gestrafft. Da das Standrohr 611 in Fig. 9 weggelassen ist, ist das Messseil 602 zwischen der Elektronikeinrichtung 601 und dem Straffgewicht 620 zu erkennen.

Fig. 10 zeigt eine Schnittdarstellung des Feldgeräts 800 aus Fig. 8, wobei ebenfalls die Elektronikeinrichtung 601, die Einkoppeleinrichtung 801, der Flansch 802, das Messseil 602, das Standrohr 611 und das Straffgewicht 620 zu sehen ist.

Fig. 11 zeigt ein Flussdiagramm für ein Verfahren zum Herstellen einer Sondenvorrichtung gemäß einem exemplarischen Ausführungsbeispiel der vorliegenden Erfindung.

Ausgehend von einem Startzustand S1100 erfolgt im Schritt S1200 das Bereitstellen eines Sondenendkörpers. Es erfolgt nach dem Bereitstellen des Sondenendkörpers im Schritt S1300 das Erstellen einer Aufnahmeöffnung für das Einstecken eines Endes eines Messseils in den Sondenkörper und in Schritt S1400 das Formen einer Wandung 135, 135' der Aufnahmeöffnung 122 und/oder des Sondenendkörpers 105 derart, dass sie einen Verlauf des in die Aufnahmeöffnung 122 eingesteckten Messseilendabschnitts 102''' oder eines Messseilendabschnitts 102''' vorgeben kann. Das Formen der Wandung 135, 135' erfolgt derart, dass sie den in die Aufnahmeöffnung 122 eingesteckten Messseilendabschnitt 102''' von zumindest einer Begrenzung 105', 105", 105''', 105'''' des Sondenendkörpers 105 beabstandet.

Das Verfahren endet in Schritt S1500.

In einem anderen Beispiel mag die Wandung zu einem Hohlraum 121 in den Sondenendkörper 105 ausgeformt werden, der sich an die Aufnahmeöffnung 122 anschließt. Danach erfolgt das Anpassen der Aufnahmeöffnung 122 derart an den Querschnitt des Messseils 102, dass die Aufnahmeöffnung mit dem Messseil verschließbar ist, sodass der Hohlraum 121 gegenüber einer Umgebung abtrennbar ist, wenn das Messseil in den Hohlraum eingesteckt ist. In diesem eingesteckten Zustand verhindert das Messseil, dass ein Füllgut in das Innere eines Sondenkörpers eindringen kann.

In dem Sondenendkörper 105 wird eine Länge des Hohlraums derart ausgebildet, dass die Länge größer ist als die Länge, welche dem senkrechten Abstand d, s" von der Aufnahmeöffnung zu einer gegenüber angeordneten Begrenzung des Sondenendkörpers entspricht, wobei die Begrenzung eingerichtet ist, den Hohlraum gegenüber der Umgebung im Wesentlichen abzutrennen. Die Abtrennung des Hohlraums verhindert im Wesentlichen, dass in den Hohlraum oder an ein in den Hohlraum eingestecktes Messseil Füllgut gelangen kann. Jedoch kann der Sondenkörper so geformt sein, dass der Sondenkörper zwar als Isolierung für das Messseil dient, jedoch das Füllgut in das Innere eines Straffgewichtes eindringen kann.

Das mag bedeuten, dass in dem Sondenendkörper 105 ein Volumen des Hohlraums derart ausgebildet wird, dass das Volumen größer ist als das Volumen eines vergleichbaren Zylinders, der eine Grundfläche aufweist, welche dem Querschnitt der Aufnahmeöffnung entspricht und eine Länge aufweist, welche dem senkrechten Abstand d, s" von der Aufnahmeöffnung zu einer gegenüber angeordneten Begrenzung des Sondenkörpers entspricht.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Seilsonde, ausgeführt für ein Füllstandmessgerät (101), aufweisend:
ein Messseil (102) mit einem vorgebbaren Querschnitt, welches zum Führen einer Radarwelle oder einer Mikrowelle ausgeführt ist;
eine Sondenendvorrichtung (120), aufweisend:
einen Sondenendkörper (105) mit einer Aufnahmeöffnung (122), wobei ein Endabschnitt (102''') des Messseils (102) in die Aufnahmeöffnung (122) eingesteckt ist;
wobei die Aufnahmeöffnung (122) eine Wandung (135, 135') aufweist, welche eingerichtet ist, einen Verlauf des in die Aufnahmeöffnung (122) eingesteckten Endabschnitts (102") des Messseils vorzugeben; und
wobei die Wandung (135, 135') weiter eingerichtet ist, den in die Aufnahmeöffnung (122) eingesteckten Endabschnitt (102''') des Messseils von zumindest einer Begrenzung (105', 105", 105''', 105"") des Sondenendkörpers zu beabstanden;
wobei die Wandung (135, 135') einen Hohlraum (121) innerhalb des Sondenendkörpers (105) ausbildet, welcher sich an die Aufnahmeöffnung (122) anschließt; **dadurch gekennzeichnet, dass**
der Hohlraum (121) L-förmig, U-förmig und/oder schneckenförmig ausgebildet ist, so dass der Hohlraum (121) eine Länge aufweist, welche größer ist als die Länge des senkrechten Abstands von der Aufnahmeöffnung (122) zu einer gegenüber der Aufnahmeöffnung (122) angeordneten Begrenzung (105") des Sondenendkörpers (105).

2. Seilsonde nach Anspruch 1,
wobei die Aufnahmeöffnung (122) derart an den Querschnitt des Messseils (102) angepasst ist, dass die Aufnahmeöffnung (122) mit dem Messseil (102) verschließbar ist, so dass der Hohlraum (121) gegenüber einer Umgebung (123) abtrennbar ist, wenn das Messseil (102) in dem Hohlraum eingesteckt ist; und
wobei die Begrenzung (105") eingerichtet ist, den Hohlraum (121) gegenüber der Umgebung (123) im Wesentlichen abzutrennen.

3. Seilsonde nach Anspruch 1 oder 2, wobei der Sondenendkörper (105), die Wandung (135, 135') und/oder der Hohlraum (121) derart eingerichtet ist/sind, dass durch ihn/sie eine Verlaufsform des eingesteckten Endabschnitts (102''') des Messseils (102) vorgebbar ist.

4. Seilsonde nach einem der Ansprüche 1 bis 3, wobei der Hohlraum (121) den Querschnitt der Aufnahmeöffnung (122) aufweist und die Länge aufweist; und
wobei der Querschnitt des Hohlraums (121) über die gesamte Länge dem Querschnitt der Aufnahmeöffnung entspricht.

5. Seilsonde nach einem der Ansprüche 1 bis 4, wobei der Sondenendkörper (105) aus Kunststoff und/oder Metall hergestellt ist.

6. Seilsonde nach einem der Ansprüche 1 bis 5, wobei die Wandung (135, 135') und/oder der Hohlraum (121) eine Befestigungseinrichtung (106) für ein Messseilende aufweist.

7. Seilsonde nach einem der Ansprüche 1 bis 6, wobei der Sondenendkörper (105) eine Zentriereinrichtung (103) und/oder eine Beabstandungseinrichtung (104) aufweist;
wobei die Zentriereinrichtung (103) und/oder die Beabstandungseinrichtung (104) eingerichtet ist/sind ein in den Sondenendkörper (105) eingestecktes Messseil (102) in einer vorgebbaren Position zu halten.

8. Seilsonde nach einem der Ansprüche 1 bis 7, wobei der Sondenendkörper (105) und/oder die Beabstandungseinrichtung (103) scheibenförmig, tonnenförmig, sternförmig und/oder speichenradförmig ausgebildet ist/sind.

9. Seilsonde nach einem der voranstehenden Ansprüche, wobei die Seilsonde für die Verwendung in einem Behälter (308, 411) mit einer vorgebbaren Behälterhöhe (h, h') eingerichtet ist;
wobei das Messseil (102) eine Länge aufweist, welche größer ist als die vorgebbare Behälterhöhe (h, h') und/oder größer als eine vorgebbare Sondenlänge (1).

10. Seilsonde nach einem der voranstehenden Ansprüche, wobei das Messseil (102) ein zweites Ende aufweist;
wobei das zweite Ende eine Einkoppeleinrichtung (127) für eine elektromagnetische Welle (312, 412) aufweist.

11. Füllstandmessgerät (100, 100a, 800), aufweisend:
eine Elektronikeinrichtung (101, 601);
eine Seilsonde nach einem der voranstehenden Ansprüche;
wobei die Elektronikeinrichtung (101, 601) mit dem Messseil (102, 102', 602) verbunden ist;
wobei die Elektronikeinrichtung (101, 601) zum Senden und/oder zum Empfangen einer elektromagnetischen Welle (312, 412) ausgebildet ist.

12. Füllstandmessgerät (100, 100a, 800) nach Anspruch 11, wobei das Feldgerät (100, 100a, 800) als ein Zweileiter-Feldgerät ausgebildet ist.

13. Verfahren zum Herstellen einer Seilsonde mit einer Sondenendvorrichtung (120) und einem Messseil (102) nach einem der Ansprüche 1 bis 10, aufweisend:
Bereitstellen eines Sondenendkörper (105);
Erstellen einer Aufnahmeöffnung (122), für das Einstecken eines Messseilendes (102) in den Sondenendkörper (105);
Formen einer Wandung (135, 135') der Aufnahmeöffnung (122) derart, dass sie einen Verlauf des in die Aufnahmeöffnung (122) eingesteckten Endabschnitts (102''') des Messeils (102) vorgeben kann; und
Formen der Wandung (135, 135') derart, dass sie den in die Aufnahmeöffnung (122) eingesteckten Endabschnitt (102''') des Messseils (102) von zumindest einer Begrenzung (105', 105", 105''', 105'''') des Sondenendkörpers (105) beabstandet; und
Einstecken eines Endabschnitts (102''') des Messseils (102) in die Aufnahmeöffnung (122).

## Claims

1. Cable probe configured for a level measuring device (101), the cable probe comprising:
a measuring cable (102) having a predeterminable cross-section, which is configured to guide a radar wave or a microwave;
a probe end device (120), comprising:
a probe end body (105) having a receiving opening (122), wherein an end portion (102''') of the measuring cable (102) is inserted into the receiving opening (122);
wherein the receiving opening (122) comprises a wall (135, 135'), which is configured to define a course of the end portion (102") of the measuring cable inserted into the receiving opening (122); and
wherein the wall (135, 135') is further configured to space apart the end portion (102''') of the measuring cable inserted into the receiving opening (122) from at least one boundary (105', 105", 105"', 105'''') of the probe end body;
wherein the wall (135, 135') forms a cavity (121) within the probe end body (105) which adjoins the receiving opening (122); **characterized in that**
the cavity (121) is L-shaped, U-shaped and/or helical-shaped such that the cavity (121) has a length which is greater than the length of a vertical distance from the receiving opening (122) to a boundary (105") arranged opposite the receiving opening (122) of the probe end body (105).

2. Cable probe according to claim 1,
wherein the receiving opening (122) is adapted in such a way to the cross-section of the measuring cable (102) that the receiving opening (122) is closable with the measuring cable (102) such that the cavity (121) is separable from an environment (123) when the measuring cable (102) is inserted in the cavity; and
wherein the boundary (105") is configured to substantially separate the cavity (121) from the environment (123).

3. Cable probe according to claim 1 or 2, wherein the probe end body (105), the wall (135, 135') and/or the cavity (121) is/are configured such that it/they can define a shape of the inserted end portion (102''') of the measuring cable (102).

4. Cable probe according to any of claims 1 to 3, wherein the cavity (121) comprises the cross-section of the receiving opening (122) and the length; and
wherein the cross-section of the cavity (121) corresponds to the cross-section of the receiving opening over the entire length.

5. Cable probe according to any of claims 1 to 4, wherein the probe end body (105) is made of plastic and/or metal.

6. Cable probe according to any of claims 1 to 5, wherein the wall (135, 135') and/or the cavity (121) comprises a fastening device (106) for a measuring cable end.

7. Cable probe according to any of claims 1 to 6, wherein the probe end body (105) comprises a centering device (103) and/or a spacing device (104);
wherein the centering device (103) and/or the spacing device (104) is/are configured to hold a measuring cable (102) inserted into the probe end body (105) in a predeterminable position.

8. Cable probe according to any of claims 1 to 7, wherein the probe end body (105) and/or the spacing device (103) is/are disc-shaped, barrel-shaped, star-shaped and/or spoke wheel-shaped.

9. Cable probe according to any of the preceding claims, wherein the cable probe is configured for use in a container (308, 411) having a predeterminable container height (h, h');
wherein the measuring cable (102) comprises a length which is greater than the predeterminable container height (h, h') and/or greater than a predeterminable probe length (1).

10. Cable probe according to any of the preceding claims, the measuring cable (102) having a second end;
wherein the second end comprises a coupling device (127) for an electromagnetic wave (312, 412).

11. Level measuring device (100, 100a, 800), comprising:
an electronic device (101, 601);
a cable probe according to any of the preceding claims;
wherein the electronic device (101, 601) is connected to the measuring cable (102, 102', 602);
wherein the electronic device (101, 601) is configured to transmit and/or receive an electromagnetic wave (312, 412).

12. Level measuring device (100, 100a, 800) according to claim 11, wherein the field device (100, 100a, 800) is configured as a two-wire field device.

13. Method for manufacturing a cable probe comprising a probe end device (120) and a measuring cable (102) according to any of claims 1 to 10, the method comprising:
providing a probe end body (105);
forming a receiving opening (122) for inserting an end portion of a measuring cable (102) into the probe end body (105);
forming a wall (135, 135') of the receiving opening (122) so as to define a course of the end portion (102''') of the measuring cable (102) inserted into the receiving opening (122); and
forming the wall (135, 135') such that it separates the end portion (102''') inserted into the receiving opening (122) of the measuring cable (102) from at least one boundary (105', 105", 105"', 105''') of the probe end body (105); and
inserting an end portion (102''') of the measuring cable (102) into the receiving opening (122).

## Revendications

1. Sonde à câble, réalisée pour un appareil de mesure de remplissage (101), comportant :
un câble de mesure (102) comportant une section pouvant être prédéfinie, lequel est réalisé pour guider une onde radar ou une micro-onde ;
un dispositif sondeur (120), comportant :
un corps sondeur (105) doté d'une ouverture de logement (122), dans laquelle un tronçon terminal (102''') du câble de mesure (102) est inséré dans l'ouverture de logement (122) ;
dans laquelle l'ouverture de logement (122) comporte une paroi (135, 135'), laquelle est arrangée pour définir un parcours du tronçon terminal (102''') du câble de mesure inséré dans l'ouverture de logement (122) ; et
dans laquelle la paroi (135, 135') est en outre arrangée pour écarter le tronçon terminal (102''') du câble de mesure inséré dans l'ouverture de logement (122) d'au moins une délimitation (105', 105'', 105''', 105'''') du corps sondeur ;
dans laquelle la paroi (135, 135') forme une cavité (121) à l'intérieur du corps sondeur (105), laquelle se rattache à l'ouverture de logement (122) ; **caractérisée en ce que** la cavité (121) est conçue en forme de L, en forme de U et/ou hélicoïdale, de sorte que la cavité (121) présente une longueur, laquelle est supérieure à l'écart vertical de l'ouverture de logement (122) à une délimitation (105'') du corps sondeur (105) agencée en opposition à l'ouverture de logement (122).

2. Sonde à câble selon la revendication 1,
dans laquelle l'ouverture de logement (122) est adaptée à la section du câble de mesure (102) de telle sorte que l'ouverture de logement (122) peut être fermée par le câble de mesure (102), de sorte que la cavité (121) est séparable par rapport à un environnement (123), lorsque le câble de mesure (102) est inséré dans la cavité ; et
dans laquelle la délimitation (105") est arrangée pour séparer essentiellement la cavité (121) par rapport à un environnement (123).

3. Sonde à câble selon la revendication 1 ou 2, dans laquelle le corps sondeur (105), la paroi (135, 135') et/ou la cavité (121) sont arrangés de telle sorte qu'une forme de parcours du tronçon terminal (102''') inséré du câble de mesure (102) peut être définie par leur biais.

4. Sonde à câble selon l'une des revendications 1 à 3, dans laquelle la cavité (121) possède la section et la longueur de l'ouverture de logement (122) ; et
dans laquelle la section de la cavité (121) correspond à la section de l'ouverture de logement (122) sur toute la longueur.

5. Sonde à câble selon l'une des revendications 1 à 4, dans laquelle le corps sondeur (105) est fabriqué en plastique et/ou en métal.

6. Sonde à câble selon l'une des revendications 1 à 5, dans laquelle la paroi (135, 135') et/ou la cavité (121) présente un dispositif de fixation (106) pour l'extrémité du câble de mesure.

7. Sonde à câble selon l'une des revendications 1 à 6, dans laquelle le corps sondeur (105) comporte un dispositif de centrage (103) et/ou un dispositif écarteur (104) ;
dans laquelle le dispositif de centrage (103) et/ou le dispositif écarteur (104) sont arrangés pour maintenir dans une position prédéfinie un câble de mesure (102) inséré dans le corps sondeur (105).

8. Sonde à câble selon l'une des revendications 1 à 7, dans laquelle le corps sondeur (105) et/ou le dispositif de centrage (103) sont conçus en forme de disque, de barillet, d'étoile et/ou de roue à rayons.

9. Sonde à câble selon l'une des revendications précédentes, dans laquelle la sonde à câble est arrangée pour l'utilisation dans un conteneur (308, 411) doté d'une hauteur de conteneur (h, h') pouvant être prédéfinie ;
dans laquelle le câble de mesure (102) possède une longueur supérieure à la hauteur de conteneur (h, h') pouvant être prédéfinie et/ou supérieure à une longueur de sonde (l) pouvant être prédéfinie.

10. Sonde à câble selon l'une des revendications précédentes, dans laquelle le câble de mesure (102) comporte une deuxième extrémité ;
dans laquelle la deuxième extrémité comporte un dispositif de couplage (127) pour une onde électromagnétique (312, 412).

11. Appareil de mesure de remplissage (100, 100a, 800), comportant :
un dispositif électronique (101, 601) ;
une sonde à câble selon l'une des revendications précédentes ;
dans lequel le dispositif électronique (101, 601) est connecté au câble de mesure (102, 102', 602') ;
dans lequel le dispositif électronique (101, 601) est conçu pour émettre et/ou recevoir une onde électromagnétique (312, 412).

12. Appareil de mesure de remplissage (100, 100a, 800) selon la revendication 11, dans lequel l'appareil de terrain (100, 100a, 800) est conçu comme appareil de terrain à deux conducteurs.

13. Procédé de fabrication d'une sonde à câble dotée d'un dispositif sondeur (120) et d'un câble de mesure (102) selon l'une des revendications 1 à 10, comportant :
la préparation d'un corps sondeur (105) ;
la création d'une ouverture de logement (122) pour l'insertion d'une extrémité de câble de mesure (102) dans le corps sondeur (105) ;
la formation d'une paroi (135, 135') de l'ouverture de logement (122) de sorte que celle peut définir un parcours du tronçon terminal (102''') du câble de mesure inséré dans l'ouverture de logement (122) ; et
la formation de la paroi (135, 135') de sorte qu'elle écarte le tronçon terminal (102''') du câble de mesure (102) inséré dans l'ouverture de logement (122) d'au moins une délimitation (105', 105'', 105''', 105'''') du corps sondeur (105) ; et
l'insertion du tronçon terminal (102''') du câble de mesure (102) dans l'ouverture de logement (122).
